# EUROPÄISCHE PATENTSCHRIFT

(11) **EP 4 172 529 B1**
(45) Veröffentlichungstag und Bekanntmachung des Hinweises auf die Patenterteilung: **15.05.2024**
(21) Anmeldenummer: 21739906.2
(22) Anmeldetag: 24.06.2021
(51) Int. Cl.: F16L 37/14, F16L 37/088

(54) **KOPPLUNGSVERFAHREN VON STECKVERBINDERN ZU EINER STECKERBAUGRUPPE UND STECKERBAUGRUPPE**
METHOD FOR COUPLING PLUG CONNECTORS IN ORDER TO FORM A PLUG ASSEMBLY, AND PLUG ASSEMBLY
PROCÉDÉ D'ACCOUPLEMENT DE CONNECTEURS ENFICHABLES POUR FORMER UN GROUPE DE CONNECTEURS ET GROUPE DE CONNECTEURS

(30) Priorität: 25.06.2020 AT 505382020
(43) Veröffentlichungstag der Anmeldung: 03.05.2023
(73) Patentinhaber: Henn GmbH & Co KG., 6850 Dornbirn (AT)
(72) Erfinder: HOHLFELD, Sven, 6710 Nenzing (AT)
(74) Vertreter: Burger, Hannes
(86) Internationale Anmeldenummer: PCT/AT2021/060222
(87) Internationale Veröffentlichungsnummer: WO 2021/258123

(56) Entgegenhaltungen:
- DE-A1-102008 046 143
- FR-A- 1 398 823
- JP-B2- 4 529 133
- US-A1- 2005 153 593

## Beschreibung

Die Erfindung betrifft ein Verfahren zum Koppeln von Steckverbindern zu einer Steckerbaugruppe und eine Steckerbaugruppe, welche zur Verbindung von Leitungen für flüssige und/oder gasförmige Medien ausgebildet ist.

Die DE 10 2008 046 143 A1 beschreibt eine gattungsgemäß ausgebildete Schnellkupplungsanordnung zur fluidleitenden Verbindung mit Fluidleitungseinrichtungen, mit einem Stutzen und einer damit lösbar verbindbaren Kupplung sowie einer zwischen dem Stutzen und der Kupplung angeordneten Dichtungseinrichtung. Eine Federeinrichtung steht mit der Kupplung in lösbarem Formschlusseingriff. Die bügelförmig ausgebildete Federeinrichtung hält den Bügelring in Axialrichtung an der Kupplung. Schenkel der Federeinrichtung durchragen den weiblichen Aufnahmeraum in Tangentialrichtung. Der Stutzen ist zur Bildung der Kopplungsstellung in den weiblichen Aufnahmeraum der Kupplung einzuschieben und kommt mit den Schenkeln der Federeinrichtung in Arretiereingriff. Nachteilig dabei ist, dass beim Einschieben des Stutzens in die Kupplung eine hohe Axialkraft zur Aufweitung der Schenkel der Federeinrichtung aufzubringen ist.

Die EP 2 602 531 A1 beschreibt ein Verriegelungsorgan, eine damit ausgestattete Anschlussvorrichtung und ein Verriegelungsverfahren einer derartigen Anschlussvorrichtung. Das Verriegelungsorgan ist zur Ausstattung einer rastbaren Anschlussvorrichtung für den Flüssigkeitstransfer bestimmt, welche eine männliche rohrförmige Muffe mit einem Flansch und eine weibliche rohrförmige Muffe, die von einem Kopplungsring umgeben und axial verlängert ist, umfasst. Das Verriegelungsorgan weist zwei elastische Verriegelungsflügel auf, die zwischen sich mittels eines Greifkopfs verbunden sind. Die Verriegelungsflügel sind in tangentialer Richtung in jeweils beidseits ausgebildete Schlitze einsetzbar. An den beiden Verriegelungsflügeln sind jeweils zusätzliche Verriegelungshülsen diametral zueinander angeordnet, welche nach dem vollständigen Einsetzen der männlichen Muffe in die weibliche Muffe eine Verriegelungsstellung mit der männlichen rohrförmige Muffe ausbilden. Beim Einschieben der männlichen Muffe werden die beiden Verriegelungsflügel in radialer Richtung aufgeweitet, um sie auf das Endstück der männlichen Muffe zu führen. Nach dem vollständigen Eindrücken rasten die Verriegelungsflügel mit deren Verriegelungshülsen hinterhalb des Flansches ein und bilden damit die Arretierstellung aus.

Es beschreibt die WO 2018/069384 A1 einen Verbinder, eine Verbinderbaugruppe und Verfahren zur Herstellung des Verbinders. Der Verbinder umfasst ein Verbindergehäuse, das einen sich von einer ersten Öffnung weg erstreckenden Fluidkanal aufweist, wobei im Bereich der ersten Öffnung eine Verriegelungsvorrichtung mit einem Verriegelungsgehäuse und einem Verriegelungselement vorgesehen ist. Das Verriegelungsgehäuse umschließt das Verbindergehäuse bezüglich des Fluidkanals in Umfangsrichtung so, dass zwischen dem Verbindergehäuse und dem Verriegelungsgehäuse ein die erste Öffnung konzentrisch umgebender Ringspalt zur Aufnahme eines im wesentlichen zylindrischen Anschlussstutzens gebildet ist. Das Verriegelungselement ragt mit seinen Halteabschnitten elastisch federnd in den Ringspalt, wobei das Verriegelungsgehäuse ein vom Verbindergehäuse separates Bauteil ist. Das Verriegelungselement ist ein Bügel, der das Verriegelungsgehäuse zumindest abschnittsweise in Umfangsrichtung umschließt und der mit seinen Halteabschnitten von einer radialen Außenseite in den Ringspalt ragt. Der Bügel liegt in einer in Umfangsrichtung verlaufenden Nut, in der der Bügel sicher gehalten ist. Es werden auch hier die Halteabschnitte des Bügels beim Einschieben und miteinander Kuppeln in radialer Richtung aufgeweitet.

Es beschreibt auch die EP 3 244 113 A1 einen Verriegelungsbügel für einen Stutzen eines Schnellkupplungssystems. Der Stutzen weist entlang des Umfangs eine erste Aufnahmeschlitzgruppe mit ersten Aufnahmeschlitzen und eine zweite Aufnahmeschlitzgruppe mit zweiten Aufnahmeschlitzen auf. Der Verriegelungsbügel weist seinerseits einen zumindest teilweise umlaufenden ersten Bügelabschnitt mit einer ersten Vorsprunggruppe auf, welche radial nach innen gerichtete erste Vorsprünge aufweist, welche vorgesehen sind, in die ersten Aufnahmeschlitze der ersten Aufnahmeschlitzgruppe des Stutzens einzugreifen. Weiters umfasst der Verriegelungsbügel einen zumindest teilweise umlaufenden zweiten Bügelabschnitt mit einer zweiten Vorsprunggruppe, welche ebenfalls radial nach innen gerichtete zweite Vorsprünge aufweist, welche vorgesehen sind, in die zweiten Aufnahmeschlitze der zweiten Aufnahmeschlitzgruppe des Stutzens einzugreifen. Ein gebogener Federabschnitt kann den ersten Bügelabschnitt mit dem zweiten Bügelabschnitt zu einem gemeinsamen Bauteil miteinander verbinden, wobei der gebogene Federabschnitt winklig zu der ersten und zweiten Vorsprunggruppe angeordnet ist. Es können aber die beiden Bügelabschnitte jeweils einen eigenen Bauteil ausbilden. Die erste und zweite Vorsprunggruppe des Verriegelungsbügels oder der jeweils eigenen Bügelabschnitte bilden Rastelemente zum Kuppeln eines Stutzens mit einem darin einführbaren Gegenstutzen aus. Beim Kupplungsvorgang werden auch hier die einzelnen Vorsprunggruppen des Verriegelungsbügels beim Einschieben in radialer Richtung aufgeweitet. Beim radialen Aufweiten des Verrieglungsbügels durch das Einführen des Gegenstutzens in den Stutzen wird der gebogene Federabschnitt aufgebogen und dabei gespreizt.

In der EP 2 372 209 A2 ist eine Abgasleitung für ein Kraftfahrzeug und eine Abgasanlage eines Kraftfahrzeugs beschrieben. Ein erster Endabschnitt und ein zweiter Endabschnitt der Abgasleitung sind gasdicht miteinander verbunden. Der erste Endabschnitt weist einen Einsteckbereich auf, der in einem Aufnahmebereich des zweiten Endabschnitts eingesteckt ist. Der Einsteckbereich weist einen Rastvorsprung mit einer Rastseite und einer Anlaufseite auf, die zur Rotationsachse geneigt ist, wobei ein Rastmittel in der gekuppelten Stellung an der Rastseite anliegt. Das Rastmittel ist als Federklemme ausgebildet, die in einem Schlitz im Aufnahmebereich geführt ist, wobei die Federklemme U-förmig ausgebildet ist und Schenkel der Federklemme jeweils einen nach außen gebogenen Abschnitt aufweisen, dessen Innenradius einem Außenradius des Einsteckbereichs entspricht. Dadurch ist eine relativ große Anlagefläche für die Schenkel an dem Rastvorsprung möglich. Es werden auch hier die U-förmig ausgebildeten Schenkel der Federklemme beim Einschieben und miteinander Kuppeln in radialer Richtung aufgeweitet und der zwischen den beiden Schenkeln befindliche Verbindungssteg umgeformt.

Aufgabe der vorliegenden Erfindung war es, die Nachteile des Standes der Technik zu überwinden und ein Verfahren zum Koppeln von Steckverbindern und eine Steckerbaugruppe zur Verfügung zu stellen, mittels derer ein Benutzer in der Lage ist, einen einfachen und kraftsparenden Kopplungsvorgang der Steckverbinder und in Eingriff bringen mit dem Arretierelement vornehmen zu können.

Diese Aufgabe wird durch ein Verfahren und eine Steckerbaugruppe gemäß den Ansprüchen gelöst.

Das angegebene Verfahren dient zum Koppeln von Steckverbindern zu einer Steckerbaugruppe, welche zur Verbindung von Leitungen für flüssige und/oder gasförmige Medien ausgebildet ist. Bei dem Verfahren werden folgende Schritte durchgeführt
- Bereitstellen eines ersten weiblichen Steckverbinders, welcher erste Steckverbinder einen rohrförmig ausgebildeten ersten Steckverbinderkörper aufweist, der einen weiblichen Aufnahmeraum mit einer ersten Längsachse definiert, wobei zumindest ein erster Kopplungsschlitz und ein zweiter Kopplungsschlitz im ersten Steckverbinderkörper einander diametral gegenüberliegend angeordnet sind,
- Bereitstellen eines zweiten männlichen Steckverbinders, welcher zweite Steckverbinder einen rohrförmig ausgebildeten zweiten Steckverbinderkörper mit
   - einem hohlzylindrischen Einsteckstutzen,
   - einem daran anschließenden kegelförmig erweiternd ausgebildeten Aufweitabschnitt, und mit
   - einem daran anschließenden Kopplungsabschnitt mit zumindest einer Kopplungsnut, wobei vom zweiten Steckverbinderkörper eine zweite Längsachse definiert wird,
- Bereitstellen zumindest eines Dichtelements und Anordnen desselben im ersten weiblichen Steckverbinder,
- Bereitstellen eines Arretierelements, welches Arretierelement bügelförmig ausgebildet ist und sich bei in der Kopplungsstellung befindlichen Steckverbindern in einem lösbaren Formschlusseingriff mit den beiden Steckverbindern befindet, das Arretierelement umfasst
   - einen ersten Schenkel,
   - einen zweiten Schenkel und
   - einen Basisschenkel, welcher Basisschenkel die beiden Schenkel miteinander verbindet, jeder der beiden Schenkel umfasst jeweils
   - einen ersten Schenkelabschnitt,
   - einen zweiten Schenkelabschnitt und
   - einen Schenkel-Verbindungsabschnitt, welcher Schenkel-Verbindungsabschnitt jeweils den ersten Schenkelabschnitt und den zweiten Schenkelabschnitt miteinander verbindet, und die ersten Schenkelabschnitte an jeweils voneinander abgewendeten Seiten am Basisschenkel daran anschließend angeordnet sind, wobei in der unverformten Ausgangsstellung zumindest die beiden zweiten Schenkelabschnitte parallel zueinander verlaufend ausgerichtet sind und weiters die beiden Schenkel-Verbindungsabschnitte in Richtung auf den Basisschenkel aufeinander zulaufend ausgerichtet sind,
- Anordnen des Arretierelements in den beiden Kopplungsschlitzen des ersten Steckverbinderkörpers, und dabei der Basisschenkel des Arretierelements in seinem Mittel zwischen den beiden Schenkeln in einer ersten Stellung in einem ersten Radialabstand von der ersten Längsachse beabstandet angeordnet wird,
- Gegenseitiges, bevorzugt fluchtendes Ausrichten der Längsachsen der beiden Steckverbinder zueinander,
- Aufeinander zu Bewegen der beiden Steckverbinder und schrittweises Einsetzen des zweiten Steckverbinders in den weiblichen Aufnahmeraum des ersten Steckverbinders,
   (a) Einschieben des hohlzylindrischen Einsteckstutzens, bei dem die beiden Schenkel-Verbindungsabschnitte in einem Teilabschnitt derselben jeweils unmittelbar benachbart zum hohlzylindrischen Einsteckstutzen oder am hohlzylindrischen Einsteckstutzen an ersten Kontaktabschnitten anliegend angeordnet werden,
   (b) Fortsetzen des Einsetzvorgangs in Axialrichtung, bei dem die beiden zweiten Schenkelabschnitte jeweils am kegelförmig erweiternd ausgebildeten Aufweitabschnitt an weiteren Kontaktabschnitten anliegend abgestützt werden, und dabei der Basisschenkel des Arretierelements in seinem Mittel zwischen den beiden Schenkeln in einer zweiten Stellung in einem zweiten Radialabstand von der Längsachse beabstandet angeordnet wird, und der zweite Radialabstand einen größeren Wert aufweist als der erste Radialabstand,
   (c) Weiteres Fortsetzen des Einsetzvorgangs in Axialrichtung, bei dem das Arretierelement bei sich in der gegenseitigen Kopplungsstellung befindlichem ersten und zweiten Steckverbinder mit seinem zweiten Schenkelabschnitt des ersten Schenkels in den ersten Kopplungsschlitz und in die Kopplungsnut eingreift und der zweite Schenkel mit seinem zweiten Schenkelabschnitt in den zweiten Kopplungsschlitz und in die Kopplungsnut eingreift.

Vorteilhaft ist bei den hier gewählten Verfahrensschritten, dass durch das Vorsehen des zwischen dem ersten und zweiten Schenkelabschnitt befindlichen Schenkel-Verbindungsabschnitts und dem Wechsel des Abstützpunktes bzw. Abstützabschnitts oder Kontaktabschnitts ausgehend von den beiden Schenkel-Verbindungsabschnitten hin auf die weiter vom Basisschenkel distanziert angeordneten zweiten Schenkelabschnitte wird eine Vergrößerung der freien Biegelänge der Schenkel und damit eine Reduzierung der aufzubringenden Steckkraft (Axialkraft) erzielt. Durch das Verlagern der Kontaktstellen oder Kontaktabschnitte entlang der Schenkel des Arretierelements und dem damit verbundenen Vergrößern des Quer- bzw. Radialabstandes zwischen dem Basisschenkel und der Längsachse während des Füge- bzw. Steckvorgangs wird die erforderliche Aufweitkraft der Schenkel voneinander verringert und damit auch die aufzubringende Steckkraft (Axialkraft) reduziert. Dies durch die Verlängerung der beiden Hebel oder Hebelarme an den jeweiligen Schenkeln des Arretierelements.

Weiters ist ein Vorgehen vorteilhaft, bei dem bei Erreichen der Kopplungsstellung das Arretierelement mit seinem Basisschenkel in die erste Stellung zurückverstellt wird. Damit wird das Arretierelement mit seinem Basisschenkel wieder näher in Richtung auf die Längsachse verlagert, wodurch die Biegelänge der Schenkel reduziert und die Haltekraft erhöht werden kann.

Eine weitere vorteilhafte Vorgehensweise ist dadurch gekennzeichnet, dass beim Schritt (a) des axialen Einsetzvorgangs des zweiten Steckverbinders in den weiblichen Aufnahmeraum des ersten Steckverbinders die beiden zweiten Schenkelabschnitte jeweils in radialer Richtung beabstandet vom hohlzylindrischen Einsteckstutzen angeordnet werden. Damit kann eine eindeutige Anlage und Abstützung der beiden Schenkel-Verbindungsabschnitte am Einsteckstutzen während der axialen Verstellbewegung erzielt werden. Erst beim Erreichen des sich nach außen erweiternden Aufweitabschnitts kann die Verlagerung des Kontaktabschnitts zwischen dem Arretierelement und dem zweiter Steckverbinderkörper eingeleitet und begonnen werden.

Vorteilhaft ist auch eine Verfahrensvariante, bei welcher nach dem Beginn des Schritts (b) die beiden Schenkel-Verbindungsabschnitte vom kegelförmig erweiternd ausgebildeten Aufweitabschnitt abgehoben werden. Damit kann sichergestellt werden, dass der Kontaktpunkt oder der Kontaktabschnitt einwandfrei festgelegt und bestimmt werden kann. Weiters kann damit aber auch die auftretende Reibungskraft gering gehalten werden.

Eine andere Vorgehensweise zeichnet sich dadurch aus, wenn während des Schritts (b) des axialen Einsetzvorgangs der Radialabstand des Mittels des Basisschenkels ausgehend vom Wert des ersten Radialabstands hin zum zweiten Wert des zweiten Radialabstands stetig erhöht wird. Damit kann eine stete Verlängerung der freien Biegelänge erzielt werden. Je weiter die beiden Schenkel voneinander aufgeweitet werden, desto größer wird auch die freie Biegelänge und es kann die Einsteckkraft in geringen Grenzen gehalten werden.

Weiters ist ein Vorgehen vorteilhaft, bei dem die beiden Schenkel-Verbindungsabschnitte des Arretierelements bei sich in der Kopplungsstellung befindlichen Steckverbindern jeweils zu ihrem überwiegenden Längenanteil in der Kopplungsnut angeordnet oder aufgenommen werden. Damit kann eine noch bessere Fixierung und ein höherer Formschluss in der Arretierstellung der Schenkel des Arretierelements erzielt werden.

Eine weitere vorteilhafte Vorgehensweise ist dadurch gekennzeichnet, dass der Basisschenkel des Arretierelements, insbesondere dessen Mittelabschnitt, zumindest in der Kopplungsstellung am ersten Steckverbinder anliegend abgestützt wird. Damit kann eine eindeutigere Lagepositionierung des Arretierelements am ersten Steckverbinder geschaffen werden.

Vorteilhaft ist auch eine Verfahrensvariante, bei welcher der Wert des zweiten Radialabstands des Basisschenkels von der Längsachse nach dem Verlassen des Aufweitabschnitts der beiden Schenkel und vor dem jeweiligen Einbringen der beiden zweiten Schenkelabschnitte in die Kopplungsnut ein Maximum beträgt. So kann bei größter radialer Aufweitung der beiden Schenkel auch die maximale Verlängerung der freien Biegelänge von jedem der Schenkel erzielt werden.

Die Aufgabe der Erfindung wird aber unabhängig davon auch durch eine Steckerbaugruppe gemäß den nachfolgend angegebenen Merkmalen gelöst.

Die Steckerbaugruppe ist zur Verbindung von Leitungen für flüssige und/oder gasförmige Medien ausgebildet und umfasst
- einen ersten weiblichen Steckverbinder, welcher erste Steckverbinder einen rohrförmig ausgebildeten ersten Steckverbinderkörper aufweist, der einen weiblichen Aufnahmeraum mit einer ersten Längsachse definiert, wobei zumindest ein erster Kopplungsschlitz und ein zweiter Kopplungsschlitz im ersten Steckverbinderkörper einander diametral gegenüberliegend angeordnet sind,
- einen zweiten männlichen Steckverbinder, welcher zweite Steckverbinder einen rohrförmig ausgebildeten zweiten Steckverbinderkörper mit
   - einem hohlzylindrischen Einsteckstutzen,
   - einem daran anschließenden kegelförmig erweiternd ausgebildeten Aufweitabschnitt, und mit
   - einem daran anschließenden Kopplungsabschnitt mit zumindest einer Kopplungsnut, wobei der zweite Steckverbinderkörper eine zweite Längsachse definiert,
- wobei die beiden Steckverbinder in Axialrichtung in eine lösbare Kopplungsstellung verbringbar sind,
- zumindest ein Dichtelement, welches Dichtelement im ersten weiblichen Steckverbinder angeordnet ist,
- ein Arretierelement, welches Arretierelement bügelförmig ausgebildet ist und in der Kopplungsstellung in einem lösbaren Formschlusseingriff mit den beiden Steckverbindern steht, das Arretierelement umfasst
   - einen ersten Schenkel,
   - einen zweiten Schenkel und
   - einen Basisschenkel, welcher Basisschenkel die beiden Schenkel miteinander verbindet, jeder der beiden Schenkel umfasst jeweils
   - einen ersten Schenkelabschnitt,
   - einen zweiten Schenkelabschnitt und
   - einen Schenkel-Verbindungsabschnitt, welcher Schenkel-Verbindungsabschnitt jeweils den ersten Schenkelabschnitt und den zweiten Schenkelabschnitt miteinander verbindet, und die ersten Schenkelabschnitte an jeweils voneinander abgewendeten Seiten am Basisschenkel daran anschließend angeordnet sind, wobei in der unverformten Ausgangsstellung zumindest die beiden zweiten Schenkelabschnitte parallel zueinander verlaufend ausgerichtet sind und weiters die beiden Schenkel-Verbindungsabschnitte in Richtung auf den Basisschenkel aufeinander zulaufend ausgerichtet sind,
- wobei das Arretierelement bei sich in der Kopplungsstellung befindlichem ersten und zweiten Steckverbinder mit seinem ersten Schenkel in den ersten Kopplungsschlitz und in die Kopplungsnut eingreift und der zweite Schenkel in den zweiten Kopplungsschlitz und in die Kopplungsnut eingreift, und
- wobei der Basisschenkel des Arretierelements zumindest in der Kopplungsstellung in seinem Mittel zwischen den beiden Schenkeln in einer ersten Stellung in einem ersten Radialabstand von der Längsachse beabstandet angeordnet ist, und wobei weiters noch vorgesehen ist
- dass beim Beginn des axialen Einsetzens des zweiten Steckverbinders in den weiblichen Aufnahmeraum des ersten Steckverbinders jeweils die beiden Schenkel-Verbindungsabschnitte in einem Teilabschnitt derselben unmittelbar benachbart zum hohlzylindrischen Einsteckstutzen oder am hohlzylindrischen Einsteckstutzen an ersten Kontaktabschnitten anliegend angeordnet sind,
- dass beim weiteren Einsetzen in Axialrichtung jeweils die beiden zweiten Schenkelabschnitte am kegelförmig erweiternd ausgebildeten Aufweitabschnitt an weiteren Kontaktabschnitten anliegend abgestützt sind,
- dass zumindest in der am kegelförmig erweiternd ausgebildeten Aufweitabschnitt anliegenden Stellung der zweiten Schenkelabschnitte der Basisschenkel des Arretierelements in seinem Mittel zwischen den beiden Schenkeln in einer zweiten Stellung in einem zweiten Radialabstand von der Längsachse beabstandet angeordnet ist, und
- dass der zweite Radialabstand einen größeren Wert aufweist ist als der erste Radialabstand.

Der dadurch erzielte Vorteil liegt darin, dass durch das Vorsehen des zwischen dem ersten und zweiten Schenkelabschnitt befindlichen Schenkel-Verbindungsabschnitts und dem Wechsel des Abstützpunktes bzw. Abstützabschnitts oder Kontaktabschnitts ausgehend von den beiden Schenkel-Verbindungsabschnitten hin auf die weiter vom Basisschenkel distanziert angeordneten zweiten Schenkelabschnitte wird eine Vergrößerung der freien Biegelänge der Schenkel und damit eine Reduzierung der aufzubringenden Steckkraft (Axialkraft) erzielt. Durch das Verlagern der Kontaktstellen oder Kontaktabschnitte entlang der Schenkel des Arretierelements und dem damit verbundenen Vergrößern des Quer- bzw. Radialabstandes zwischen dem Basisschenkel und der Längsachse während des Füge- bzw. Steckvorgangs wird die erforderliche Aufweitkraft der Schenkel voneinander verringert und damit auch die aufzubringende Steckkraft (Axialkraft) reduziert. Dies durch die Verlängerung der beiden Hebel oder Hebelarme an den jeweiligen Schenkeln des Arretierelements.

Weiters kann es vorteilhaft sein, wenn bei sich in der Kopplungsstellung befindlichem Arretierelement der Basisschenkel in seine erste Stellung zurückverstellt ist. Damit wird das Arretierelement mit seinem Basisschenkel wieder näher in Richtung auf die Längsachse verlagert, wodurch die Biegelänge der Schenkel reduziert und die Haltekraft erhöht werden kann.

Eine andere Ausführungsform zeichnet sich dadurch aus, dass beim Beginn des axialen Einsetzens des zweiten Steckverbinders in den weiblichen Aufnahmeraum des ersten Steckverbinders die beiden zweiten Schenkelabschnitte jeweils in radialer Richtung beabstandet vom hohlzylindrischen Einsteckstutzen angeordnet sind. Damit kann eine eindeutige Anlage und Abstützung der beiden Schenkel-Verbindungsabschnitte am Einsteckstutzen während der axialen Verstellbewegung erzielt werden. Erst beim Erreichen des sich nach außen erweiternden Aufweitabschnitts kann die Verlagerung des Kontaktabschnitts zwischen dem Arretierelement und dem zweiter Steckverbinderkörper eingeleitet und begonnen werden.

Eine weitere mögliche Ausführungsform hat die Merkmale, dass bei der Abstützung der beiden zweiten Schenkelabschnitte am kegelförmig erweiternd ausgebildeten Aufweitabschnitt die beiden Schenkel-Verbindungsabschnitte beabstandet vom kegelförmig erweiternd ausgebildeten Aufweitabschnitt angeordnet sind. Damit kann sichergestellt werden, dass der Kontaktpunkt oder der Kontaktabschnitt einwandfrei festgelegt und bestimmt werden kann. Weiters kann damit aber auch die auftretende Reibungskraft gering gehalten werden.

Eine weitere Ausbildung sieht vor, dass die beiden Schenkel-Verbindungsabschnitte des Arretierelements bei sich in der Kopplungsstellung befindlichen Steckverbindern jeweils zu ihrem überwiegenden Längenanteil in der Kopplungsnut angeordnet oder aufgenommen sind. Damit kann eine noch bessere Fixierung und ein höherer Formschluss in der Arretierstellung der Schenkel des Arretierelements erzielt werden.

Eine andere Ausführungsform zeichnet sich dadurch aus, dass der Basisschenkel des Arretierelements, insbesondere dessen Mittelabschnitt, zumindest in der Kopplungsstellung am ersten Steckverbinder anliegend abgestützt ist. Damit kann eine eindeutigere Lagepositionierung des Arretierelements am ersten Steckverbinder geschaffen werden.

Eine weitere bevorzugte Ausführungsform ist dadurch gekennzeichnet, dass der Wert des zweiten Radialabstands des Basisschenkels vor dem jeweiligen Einbringen der beiden zweiten Schenkelabschnitte in die Kopplungsnut ein Maximum aufweist. So kann bei größter radialer Aufweitung der beiden Schenkel auch die maximale Verlängerung der freien Biegelänge von jedem der Schenkel erzielt werden.

Weiters kann es vorteilhaft sein, wenn der Basisschenkel ausgehend von seinem Mittel zwischen den beiden Schenkeln einen dachförmig abgewinkelten Längsverlauf in Richtung auf die beiden Schenkel aufweist. Damit kann eine bessere Anpassung an die Außengeometrie des ersten Steckverbinders erzielt werden.

Eine andere alternative Ausführungsform zeichnet sich dadurch aus, dass die beiden ersten Schenkelabschnitte in der unverformten Ausgangsstellung des Arretierelements parallel zueinander verlaufend ausgerichtet sind. Damit kann eine bessere Lagefixierung des Arretierelements bei sich in der ersten Stellung befindlichen Basisschenkel erzielt werden. Darüber hinaus kann so aber auch eine ausreichend gute Querführung des Arretierelements während der axialen Einschub- oder Einsteckbewegung und der damit verbundenen Querverstellung des gesamten Arretierelements ermöglicht werden.

Eine weitere mögliche und gegebenenfalls alternative Ausführungsform hat die Merkmale, dass der Basisschenkel, jeder der ersten Schenkelabschnitte, jeder der Schenkel-Verbindungsabschnitte und jeder der zweiten Schenkelabschnitte in einer gemeinsamen Ebene verlaufend angeordnet sind. Damit kann eine schmale Ausbildung der Kopplungsschlitze und der Kopplungsnut ermöglicht werden, Darüber hinaus können so aber auch eine gute Führung des Arretierelements zumindest in den Kopplungsschlitzen erzielt werden.

Eine weitere Ausbildung sieht vor, dass jeweils ein Stützschenkel an jedem der zweiten Schenkelabschnitte an deren vom Basisschenkel abgewendeten Ende angeordnet ist und die Stützschenkel jeweils eine Längsorientierung aufweisen, welche in einer Normalrichtung bezüglich der gemeinsamen Ebene ausgerichtet ist. Damit können die beiden Enden der Schenkel besser an der Außenfläche des ersten Steckverbinders während deren Relativverlagerung geführt werden.

Eine andere Ausführungsform zeichnet sich dadurch aus, dass die beiden Stützschenkel jeweils zwischen der ersten Stellung des Basisschenkels und der zweiten Stellung des Basisschenkels und vice versa am ersten Steckverbinderkörper anliegend abgestützt sind. Je nach Ausrichtung und Ausbildung der jeweiligen Anlageflächen kann so eine zwangsweise Rückverstellung des Arretierelements von der zweiten Stellung des Basisschenkels in seine erste, näherliegende Stellung erzielt werden.

Zum besseren Verständnis der Erfindung wird diese anhand der nachfolgenden Figuren näher erläutert.

Es zeigen jeweils in stark vereinfachter, schematischer Darstellung:
- Fig. 1: die Steckerbaugruppe mit deren beiden Steckverbindern und dem Arretierelement, in noch voneinander getrennter Stellung der einzelnen Bauteile, in schaubildlicher Darstellung;
- Fig. 2: das Arretierelement nach Fig. 1, in vergrößerter Darstellung;
- Fig. 3: einen Querschnitt durch die Steckerbaugruppe nach den Fig. 1 und 2 am Beginn des Einsetzvorgangs, bei unmittelbar benachbarter Anordnung oder anliegendem Abstützen der Schenkel-Verbindungsabschnitte am Einsteckstutzen des zweiten Steckverbinders, in Ansicht entgegen der Einschubrichtung des zweiten Steckverbinders;
- Fig. 4: einen weiteren Querschnitt der Steckerbaugruppe, jedoch bei anliegendem Abstützen der zweiten Schenkelabschnitte am sich erweiternden Aufweitabschnitt des zweiten Steckverbinders, in Ansicht entgegen der Einschubrichtung des zweiten Steckverbinders;
- Fig. 5: einen weiteren Querschnitt der Steckerbaugruppe, jedoch bei in Arretierstellung befindlichem Arretierelement in der Kopplungsnut des zweiten Steckverbinders;
- Fig. 6: ein Detail der Abstützung eines Endabschnitts eines Schenkels an der Außenseite oder Außenfläche des ersten Steckverbinders, in Axialansicht und vergrößerter Darstellung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Der Begriff "insbesondere" wird nachfolgend so verstanden, dass es sich dabei um eine mögliche speziellere Ausbildung oder nähere Spezifizierung eines Gegenstands oder eines Verfahrensschritts handeln kann, aber nicht unbedingt eine zwingende, bevorzugte Ausführungsform desselben oder eine zwingende Vorgehensweise darstellen muss.

In ihrer vorliegenden Verwendung sollen die Begriffe "umfassend", "weist auf", "aufweisend", "schließt ein", "einschließlich", "enthält", "enthaltend" und jegliche Variationen dieser eine nicht ausschließliche Einbeziehung abdecken.

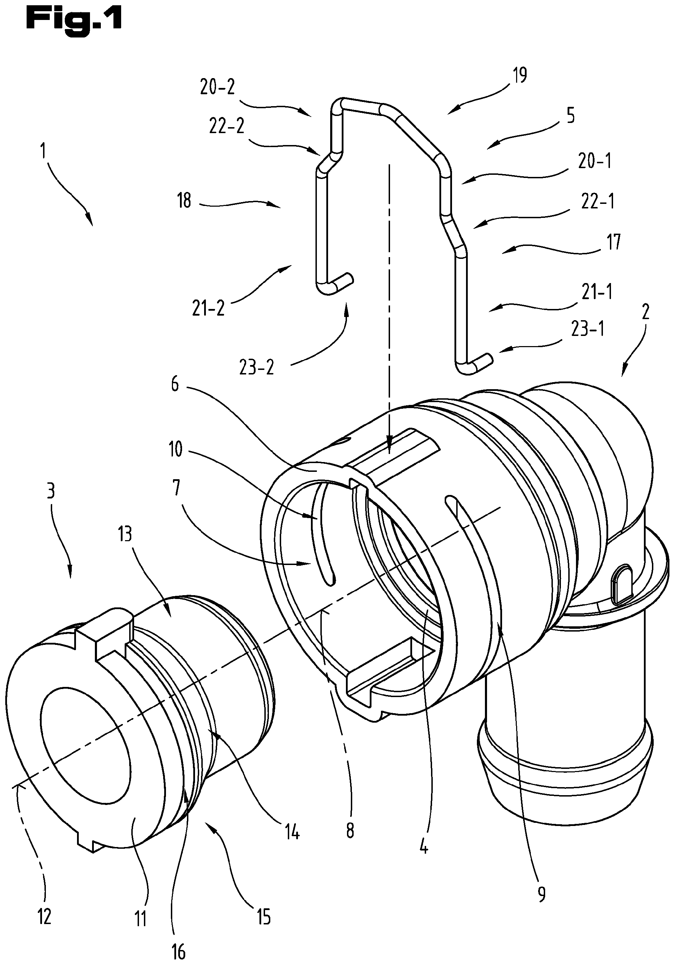

In den Fig. 1 bis 6 sind Bauteile und Bauteilkomponenten zur Bildung einer Steckerbaugruppe 1 gezeigt und beschrieben, wobei die Steckerbaugruppe 1 zur Verbindung von Leitungen für flüssige und/oder gasförmige Medien ausgebildet ist. Es sind nachfolgend sowohl die einzelnen Bauteile und Bauteilkomponenten gezeigt als auch das Verfahren zum gegenseitigen Koppeln beschrieben.

Die Steckerbaugruppe 1 umfasst einen ersten weiblichen Steckverbinder 2, einen zweiten männlichen Steckverbinder 3, ein Dichtelement 4 und zumindest ein Arretierelement 5. Auf die Darstellung und nähere Beschreibung von Anschlussleitungen beidseits der Steckverbinder 2, 3 wurde der besseren Übersichtlichkeit halber verzichtet.

Der erste Steckverbinder 2 weist einen rohrförmig ausgebildeten ersten Steckverbinderkörper 6 auf, welcher einen weiblichen Aufnahmeraum 7 mit einer ersten Längsachse 8 definiert. In bekannter Weise sind im ersten Steckverbinderkörper 6 ein erster Kopplungsschlitz 9 und ein zweiter Kopplungsschlitz 10 einander diametral gegenüberliegend angeordnet. Die beiden Kopplungsschlitze 9, 10 sind dazu ausgebildet oder dienen dazu, das Arretierelement 5 in führender Anordnung aufzunehmen und zu halten.

Der zweite Steckverbinder 3 weist seinerseits einen zweiten Steckverbinderkörper 11 auf, welcher ebenfalls rohrförmig ausgebildet ist und eine zweite Längsachse 12 definiert. Der zweite Steckverbinderkörper 11 umfasst einen hohlzylindrisch ausgebildeten Einsteckstutzen 13, einen sich daran anschließenden, kegelstumpfförmig bzw. kegelförmig erweiternden Aufweitabschnitt 14 und einen sich daran anschließenden Kopplungsabschnitt 15. Die zuvor beschriebenen Komponenten sind entgegen der Einsteckrichtung gesehen, hintereinander angeordnet. Der Kopplungsabschnitt 15 ist zumeist hohlzylindrisch ausgebildet und weist zumindest eine Kopplungsnut 16 auf. Je nach Anordnung und Ausbildung des Kopplungsabschnitts 15 kann die Kopplungsnut 16 über den Umfang durchlaufend ausgebildet sein. Es wäre aber auch möglich, ähnlich den beiden Kopplungsschlitzen 9, 10 einander diametral gegenüberliegend je eine Kopplungsnut 16 vorzusehen In diesem Fall wird die erste Kopplungsnut mit dem Bezugszeichen 16-1 und die zweite Kopplungsnut mit dem Bezugszeichen 16-2 bezeichnet. Die zumindest eine Kopplungsnut 16 dient ebenfalls in bekannter Weise dazu, bei sich in der zusammengefügten Kopplungsstellung befindlichen Steckverbindern 2, 3 mit dem Arretierelement 5 in einen lösbaren Formschlusseingriff verbracht zu werden oder zu stehen. Ist wie im vorliegenden Ausführungsbeispiel gezeigt, noch eine zusätzliche Verdreh-Sicherungsvorrichtung mit zusammenwirkenden ersten und zweiten Sicherungselementen vorgesehen, kann die Kopplungsnut 16 unterbrochen ausgebildet sein.

Der Einsteckstutzen 13 bildet zumindest abschnittsweise eine Dichtfläche zum Zusammenwirken mit dem im ersten Steckverbinder 2 aufgenommenen Dichtelement bei sich in der Kopplungsstellung befindlichen Steckverbindern 2, 3.

Das Arretierelement 5 ist zumeist oder bevorzugt aus einem metallischen Werkstoff mit Federeigenschaften gebildet. Dies bevorzugt aus einem umgeformten Runddraht. Die Grundform des Arretierelements 5 ist bügelförmig gewählt, wobei das Arretierelement 5 einen ersten Schenkel 17, einen zweiten Schenkel 18 und einen die beiden Schenkel 17, 18 miteinander verbindenden Basisschenkel 19 aufweist. Bezüglich einer Mittelebene (M) ist das Arretierelement 5 spiegelbildlich ausgebildet, wobei in der Montageposition des Arretierelements 5 am ersten Steckverbinder 2 die Mittelebene (M) in der ersten Längsachse 8 verlaufend angeordnet ist. Die beiden Schenkel 17, 18 sind seitlich von der Mittelebene (M) beabstandet angeordnet. Der Basisschenkel 19 kann ausgehend von seinem Mittel bzw. der Mittelebene (M) zwischen den beiden Schenkeln 17, 18 einen dachförmig abgewinkelten Längsverlauf in Richtung auf die beiden Schenkel 17, 18 aufweisen.

Jeder der Schenkel 17, 18 weist grundsätzlich die gleichen Komponenten auf, weshalb dafür auch grundsätzlich die gleichen Bezugszeichen beidseits der Mittelebene (M), jedoch mit dem Zusatz "-1" oder "-2" verwendet werden. So umfasst jeder der Schenkel 17, 18 einen ersten Schenkelabschnitt 20-1, 20-2, einen zweiten Schenkelabschnitt 21-1, 21-2 und jeweils einen die jeweiligen Schenkelabschnitte 20-1, 21-1 sowie 20-2, 21-2 miteinander verbindenden Schenkel-Verbindungsabschnitt 22-1, 22-2.

Die ersten Schenkelabschnitte 20-1, 20-2 sind an jeweils voneinander abgewendeten Seiten oder Enden am Basisschenkel 19 daran anschließend angeordnet. In der unverformten Ausgangsstellung des Arretierelements 5 sind zumindest die beiden zweiten Schenkelabschnitte 21-1, 21-2 überwiegend parallel oder in gewissen Grenzen parallel zueinander verlaufend ausgerichtet. Die beiden Schenkel-Verbindungsabschnitte 22-1, 22-2 sind in Richtung auf den Basisschenkel 19 aufeinander zulaufend ausgerichtet. Die beiden zweiten Schenkelabschnitte 21-1, 21-2 sind in Normalrichtung bezüglich der Mittelebene (M) in einem größeren Abstand voneinander angeordnet als die ersten Schenkelabschnitte 20-1, 20-2. Wie ersichtlich, können auch die beiden ersten Schenkelabschnitte 20-1, 20-2 in der unverformten Ausgangsstellung des Arretierelements 5 auch parallel zueinander verlaufend ausgerichtet sein.

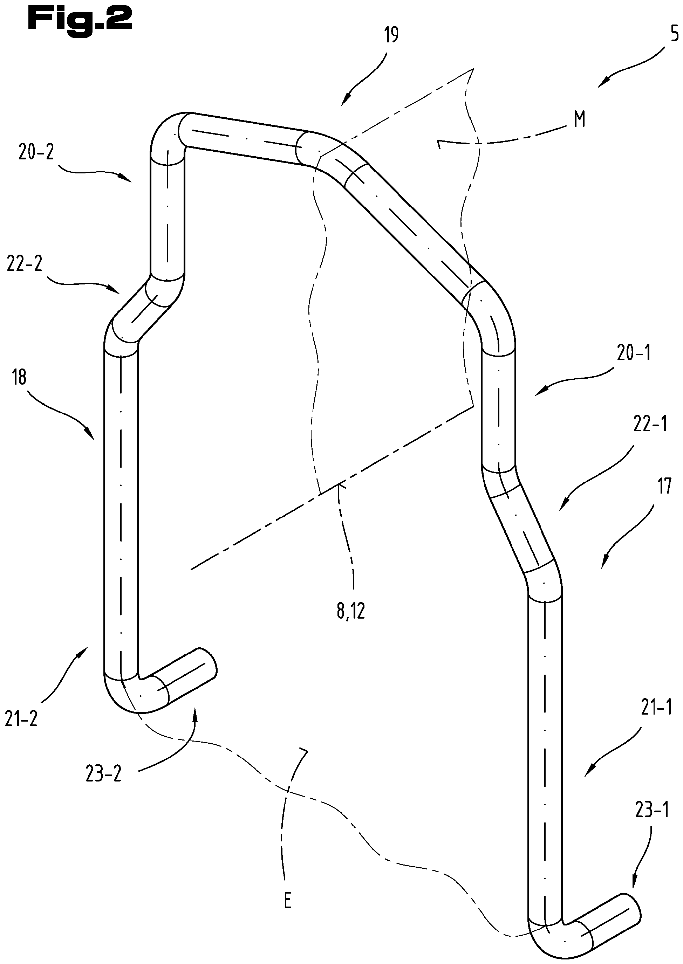

Es kann auch der Basisschenkel 19, jeder der ersten Schenkelabschnitte 20-1, 20-2, jeder der Schenkel-Verbindungsabschnitte 22-1, 22-2 und auch jeder der zweiten Schenkelabschnitte 21-1, 21-2 in einer gemeinsamen Ebene (E) verlaufend angeordnet sein. Zusätzlich kann an jedem der zweiten Schenkelabschnitte 20-1, 20-2 jeweils ein eigener Stützschenkel 23-1, 23-2 als Bestandteil des Arretierelements 5 angeordnet sein. Die Stützschenkel 23-1, 23-2 sind jeweils an den vom Basisschenkel 19 abgewendeten Enden der zweiten Schenkelabschnitte 21-1, 21-2 angeordnet, wobei die die Stützschenkel 23-1, 23-2 jeweils eine Längsorientierung aufweisen, welche in einer Normalrichtung bezüglich der gemeinsamen Ebene (E) ausgerichtet ist. Wie aus der Fig. 2 ersichtlich ist, bildet die Ebene (E) eine Normalebene bezüglich der Längsachsen 8, 12, wobei die Mittelebene (M) in den Längsachsen 8, 12 verlaufend angeordnet ist und damit eine Normalebene bezüglich der Ebene (E) bildet.

Die Stützschenkel 23-1, 23-2 können dazu dienen oder ausgebildet sein, dass sich diese jeweils zwischen der ersten Stellung des Basisschenkels 19 und der zweiten Stellung des Basisschenkels 19 und vice versa am rohrförmig ausgebildeten ersten Steckverbinderkörper 6 anliegend abgestützt sind. Die beiden Stellungen werden nachfolgend noch näher beschrieben.

Befinden sich die beiden Steckverbinder 2, 3 in deren Kopplungsstellung, greift das Arretierelement 5 mit seinem ersten Schenkel 17 in den ersten Kopplungsschlitz 9 und in die Kopplungsnut 16 ein. Gleichzeitig greift aber auch der zweite Schenkel 18 in den zweiten Kopplungsschlitz 10 und ebenfalls in die Kopplungsnut 16 ein.

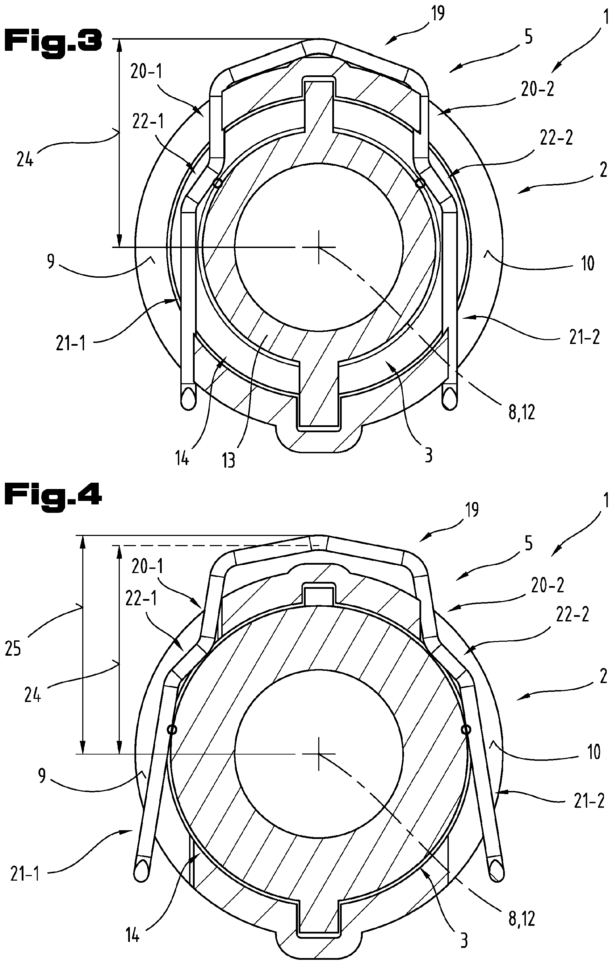

Das Arretierelement 5 ist vor dem gegenseitigen Fügen und Ineinanderschieben der beiden Steckverbinder 2, 3 mit seinen beiden Schenkeln 17, 18 in die jeweils dafür vorgesehenen Kopplungsschlitze 9, 10 des ersten Steckverbinderkörpers 6 eingesetzt und darin positioniert gehalten. Der Basisschenkel 19 des Arretierelements 5 ist dabei in seinem Mittel zwischen den beiden Schenkeln 17, 18 in einer ersten Stellung in einem ersten Radialabstand 24 von der ersten Längsachse 8 beabstandet angeordnet, wie dies am besten aus den Fig. 1 und 3 zu ersehen ist. In dieser unverformten und vormontierten Ausgangsstellung des Arretierelements 5 am ersten Steckverbinder 2 mit seinen Kopplungsschlitzen 9, 10 ragen zumindest Teilabschnitte der zweiten Schenkelabschnitt 21-1, 21-2 und auch der Schenkel-Verbindungsabschnitte 22-1, 22-2 in den weiblichen Aufnahmeraum 7 ausgehend von den beiden Kopplungsschlitzen 9, 10 hin.

Um nun die beiden Steckverbinder 2, 3 miteinander in deren Kopplungsstellung zu verbringen, ist ein gegenseitiges Ausrichten, bevorzugt ein fluchtendes Ausrichten, der beiden Längsachsen 8, 12 der beiden Steckverbinder 2, 3 zueinander durchzuführen. Dann erfolgt ein Aufeinander zu Bewegen der beiden Steckverbinder 2, 3 und schrittweises Einsetzen des zweiten Steckverbinders 3 in den weiblichen Aufnahmeraum 7 des ersten Steckverbinders 2. Das schrittweise Einsetzen kann gemäß den nachfolgend beschriebenen Schritten durchgeführt werden.

In einem ersten Schritt (a) erfolgt das Einschieben des hohlzylindrischen Einsteckstutzens 13 in den weiblichen Aufnahmeraum 7. Dabei kann zumindest einer der beiden Schenkel-Verbindungsabschnitte 22-1, 22-2 oder die beiden Schenkel-Verbindungsabschnitte 22-1, 22-2 in einem Teilabschnitt derselben jeweils am hohlzylindrischen Einsteckstutzen 13 anliegend angeordnet sein- siehe dazu Fig. 3. Je nach aktueller Anordnung des Arretierelements 5 am ersten Steckverbinder 2 ist es möglich, dass beim ersten Schritt (a) die beiden Schenkel-Verbindungsabschnitte 22-1, 22-2 jeweils unmittelbar benachbart zum hohlzylindrischen Einsteckstutzen 13 angeordnet sind und diesen gerade nicht berühren. Die Anlagepunkte bzw. ersten Kontaktabschnitte sind beidseits mit einem Kreis angedeutet. Dies deshalb, da auch die Schenkel-Verbindungsabschnitte 22-1, 22-2 in den weiblichen Aufnahmeraum 7 ausgehend von den beiden Kopplungsschlitzen 9, 10 hineinragen. Die beiden Schenkel-Verbindungsabschnitte 22-1, 22-2 sind dem Basisschenkel 19 näherliegend angeordnet als die beiden zweiten Schenkelabschnitte 21-1, 21-2.

Im weiteren nachfolgenden Schritt (b) wird der Einsetzvorgang in Axialrichtung fortgesetzt. Hierbei werden die beiden zweiten Schenkelabschnitte 21-1, 21-2 jeweils am kegelförmig erweiternd ausgebildeten Aufweitabschnitt 14 des zweiten Steckverbinderkörpers 11 anliegend abgestützt - siehe dazu Fig. 4. Die Anlagepunkte bzw. zweiten oder weiteren Kontaktabschnitte sind auch hier beidseits mit einem Kreis angedeutet. Bei dieser Abstützung der beiden zweiten Schenkelabschnitte 21-1, 21-2 am kegelförmig erweiternd ausgebildeten Aufweitabschnitt 14 können die beiden Schenkel-Verbindungsabschnitte 22-1, 22-2 beabstandet oder distanziert vom kegelförmig erweiternd ausgebildeten Aufweitabschnitt 14 angeordnet sein.

Durch die sich ortsmäßig wechselnde Abstützwirkung von den Schenkel-Verbindungsabschnitten 22-1, 22-2 hin auf die zweiten Schenkelabschnitte 21-1, 21-2 und das anliegende Abstützen am Aufweitabschnitt 14 wird der Basisschenkel 19 des Arretierelements 5 in seinem Mittel zwischen den beiden Schenkeln 17, 18 in eine zweite Stellung in einem zweiten Radialabstand 25 von der Längsachse 8, 12 beabstandet angeordnet. Der zweite Radialabstand 25 weist einen größeren Wert auf als der erste Radialabstand 24. Der zuvor beschriebene erste Radialabstand 24 ist in strichlierten Linien für den Basisschenkel 19 dargestellt.

Die Durchführung der Querverstellung des Arretierelements 5 erfolgt durch die axiale Einschub- bzw. Einsetzbewegung und das Zusammenwirken des sich nach außen erweiternden Aufweitabschnitts 14 mit den unterschiedlichen Abschnitten der beiden Schenkel 17, 18. Es ist dazu keine gesonderte manuelle Verstellbewegung des Arretierelements 5 erforderlich. Durch die Einschubbewegung in Axialrichtung in Verbindung mit den bezüglich den zweiten Schenkelabschnitten 21-1, 21-2 dazu abgewinkelt verlaufenden Schenkel-Verbindungsabschnitten 22-1, 22-2 und der Verlagerung der Kontaktpunkte bzw. Kontaktabschnitte wird die Axialkraft in eine in Querrichtung dazu ausgerichtete Verstellkraft zu einem gewissen Anteil umgelenkt. Diese Verstellkraft bewirkt die Relativverlagerung des Arretierelements 5 in Querrichtung bzw. in Radialrichtung.

Damit wird eine größere Distanzierung des Basisschenkels 19 von der Längsachse 8, 12 erzielt. Durch dieses Abheben oder Anheben des gesamten Arretierelements 5 in Querrichtung erfolgt auch eine Verlängerung des Hebels oder des Hebelarms von jedem der beiden Schenkel 17, 18 vom jeweiligen Abstützpunkt oder Abstützabschnitt bzw. Kontaktabschnitt am zweiten Steckverbinderkörper 11 hin zum Übergangsbereich des jeweiligen Schenkels 17, 18 auf den Basisschenkel 19. Durch die Verlagerung der jeweiligen ersten Kontaktabschnitte an den Schenkel-Verbindungsabschnitten 22-1, 22-2 hin zu den von den Enden des Basisschenkels bzw. zu den Übergangsabschnitten zu diesem davon weiter beabstandeten zweiten oder weiteren Kontaktabschnitten an den zweiten Schenkelabschnitten 21-1, 21-2 werden die beiden Hebel oder Hebelarme verlängert und so die erforderliche Steckkraft (Axialkraft) reduziert

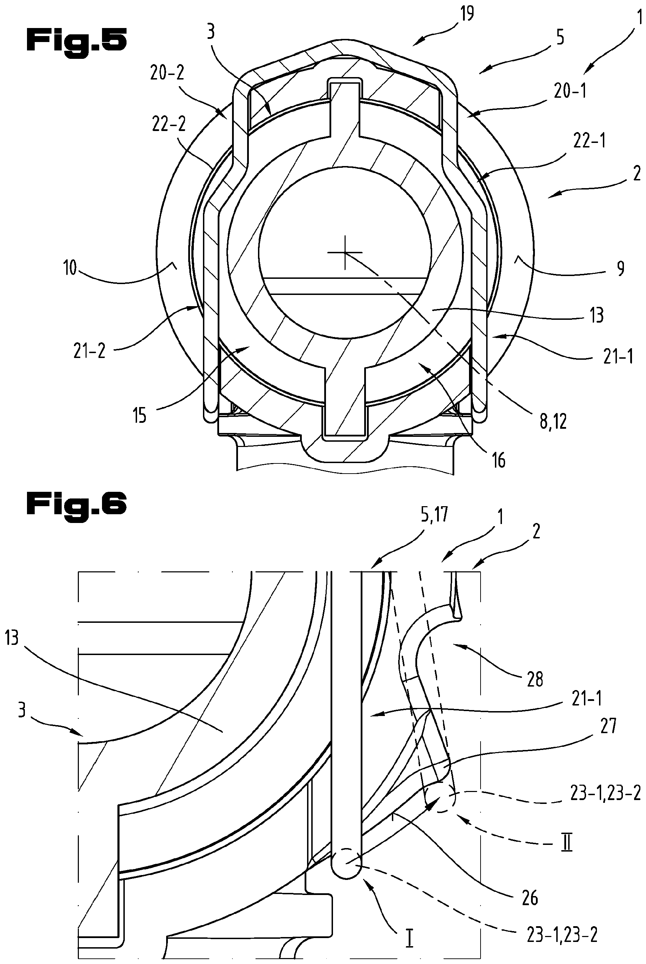

In dem darauf folgenden weiteren Schritt (c) des Einsetzvorgangs in Axialrichtung werden die beiden Steckverbinder 2, 3 in deren vorgesehene gegenseitige Kopplungsstellung verbracht. Das beidseits aufgeweitete Arretierelement 5 mit seinen beiden Schenkeln 17, 18 ist dabei in eine überdeckende Lage mit der Kopplungsnut 16 gekommen. Ist diese Stellung erreicht greift der zweite Schenkelabschnitt 21-1 des ersten Schenkels 17 sowohl in den ersten Kopplungsschlitz 9 als auch in die Kopplungsnut 16 ein - siehe dazu Fig. 5. Gleiches gilt aber auch für den zweiten Schenkel 18. Sein zweiter Schenkelabschnitt 21-2 greift sowohl in den zweiten Kopplungsschlitz 10 als auch in die Kopplungsnut 16 ein. Damit ist der Einschub- und Kopplungsvorgang durchgeführt und abgeschlossen. Die zuvor aufgeweitete Stellung der beiden Schenkel 17, 18 ist durch das Einschnappen in die Kopplungsnut 16 wieder aufgehoben. Eine gewisse Restvorspannung der beiden Schenkel 17, 18 in Richtung auf die Längsachse 8, 12 kann aufrecht erhalten bleiben.

Ist die Arretierstellung zwischen dem Arretierelement 5 und dem in den ersten Steckverbinder 2 eingesetzten zweiten Steckverbinder 3 erreicht, befinden sich auch die beiden Steckverbinder 2, 3 in deren Kopplungsstellung. Dabei wird das Arretierelement 5 mit seinem Basisschenkel 19 in die erste Stellung zurückverstellt, in welcher der Basisschenkel 19 der Längsachse 8, 12 näherliegend angeordnet ist als in seiner zweiten Stellung.

Bei dem zuvor beschriebenen Schritt (a) des axialen Einsetzvorgangs des zweiten Steckverbinders 3 in den weiblichen Aufnahmeraum 7 des ersten Steckverbinders 2 können die beiden zweiten Schenkelabschnitte 21-1, 21-2 jeweils in radialer Richtung beabstandet vom hohlzylindrischen Einsteckstutzen 13 angeordnet sein oder werden. Weiters ist es möglich, dass nach dem Beginn des Schritts (b) die beiden Schenkel-Verbindungsabschnitte vom kegelförmig erweiternd ausgebildeten Aufweitabschnitt abgehoben werden. Dies kann deshalb erfolgen, da ein Wechsel des Abstützpunktes oder Abstützabschnitts von den Schenkel-Verbindungsabschnitten 22-1, 22-2 hin zu den zweiten Schenkelabschnitten 21-1, 21-2 mit einhergeht.

Es ist auch noch möglich, dass während des Schritts (b) des axialen Einsetzvorgangs der Radialabstand des Mittels des Basisschenkels 19 ausgehend vom Wert des ersten Radialabstands 24 hin zum zweiten Wert des zweiten Radialabstands 25 stetig erhöht wird. Je weiter der zweite Steckverbinder 3 in den ersten Steckverbinder 2 eingeschoben wird, desto weiter gleiten die beiden Schenkel 17, 18, insbesondere deren zweiten Schenkelabschnitte 21-1, 21-2, entlang der Anlagefläche des sich erweiternden Aufweitabschnitts 14. Durch den Aufweitvorgang der beiden Schenkel 17, 18 wird der Basisschenkel 19 weiter von der Längsachse 8, 12 distanziert.

Befinden sich die beiden Steckverbinder 2, 3 in deren Kopplungsstellung und steht auch das Arretierelement 5 mit seinen beiden Schenkeln 17, 18 mit der Kopplungsnut 16 in Arretiereingriff, können auch die beiden Schenkel-Verbindungsabschnitte 22-1, 22-2 des Arretierelements 5 jeweils zu ihrem überwiegenden Längenanteil in der Kopplungsnut 16 angeordnet oder aufgenommen werden bzw. sein. Weiters kann es vorteilhaft sein, wenn der Basisschenkel 19 des Arretierelements 5, insbesondere dessen Mittelabschnitt, zumindest in der Kopplungsstellung außenseitig am ersten Steckverbinder 2 anliegend abgestützt wird oder ist.

Haben die beiden Schenkel 17, 18, insbesondere deren zweite Schenkelabschnitte 21-1, 21-2, den Aufweitabschnitt 14 passiert und befinden sich diese im nachfolgenden Kopplungsabschnitt 15 noch vor dem Einrasten oder Einschnappen in die Kopplungsnut 16, beträgt der Wert des zweiten Radialabstands 25 des Basisschenkels 19 von der Längsachse 8, 12 ein Maximum bzw. einen Maximalwert.

Wie zuvor bereits beschrieben und aus der Fig. 6 am besten zu ersehen, können die beiden Stützschenkel 23 mit ihrer in etwa parallelen Ausrichtung bezüglich der Längsachse 8, 12 stets anliegend am ersten Steckverbinderkörper 6 des ersten Steckverbinders 2 abgestützt sein. Durch die jeweils aufeinander zu geneigte Ausrichtung von Führungsflächen 26 auf die vom Basisschenkel 19 abgewendete Seite, kann so die Rückstellbewegung des Arretierelements 5 von der zweiten Stellung des Basisschenkels 19 in die dem ersten Steckverbinder 2 näherliegende erste Stellung erleichtert oder sogar unterstützt werden. Weiters kann damit aber auch bei Vorsehen zumindest eines Anschlagelements 27die relative Verstellbewegung und damit der Verstellweg des Arretierelements 5 von der der Längsachse 8, 12 näherliegenden Stellung des Basisschenkels 19 in die zweite Stellung begrenzt werden. Die zuvor beschriebene erste Stellung des Arretierelements 5 mit seinem Basisschenkel 19 ist für den Stützschenkel 23-1 bzw. den Stützschenkel 23-2 mit der römischen Ziffer "I" und für die zweite Stellung mit der römischen Ziffer "II" bezeichnet.

Um die beiden Schenkel 17, 18 mit ihren Teilabschnitten außer Rasteingriff mit der Kopplungsnut 16 verbringen zu können, ist das Arretierelement 5 manuell mit seinem Basisschenkel 19 auf die von der Längsachse 8, 12 zu verlagern. Durch diese Verstellbewegung können die Stützschenkel 23-1, 23-2 in eine Haltevertiefung 28 hinein verlagert werden. Dabei werden die beiden Schenkel 17, 18 soweit voneinander distanziert und aufgeweitet, dass ein Herausziehen des zweiten Steckverbinders 3 aus dem ersten Steckverbinder 2 entgegen der Einschubrichtung ohne Kollision mit den beiden Schenkeln 17, 18 möglich ist.

Abschließend sei noch erwähnt, dass die einzelnen Verfahrensschritte und deren zeitliche Abfolge nicht zwingend in der angeführten Reihenfolge erfolgen muss, sondern auch eine davon abweichende zeitliche Abfolge möglich ist.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

| | | | |
|---|---|---|---|
| | | (E) | Ebene |
| 1 | Steckerbaugruppe | (M) | Mittelebene |
| 2 | erster Steckverbinder | | |
| 3 | zweiter Steckverbinder | | |
| 4 | Dichtelement | | |
| 5 | Arretierelement | | |
| 6 | erster Steckverbinderkörper | | |
| 7 | Aufnahmeraum | | |
| 8 | erste Längsachse | | |
| 9 | erster Kopplungsschlitz | | |
| 10 | zweiter Kopplungsschlitz | | |
| 11 | zweiter Steckverbinderkörper | | |
| 12 | zweite Längsachse | | |
| 13 | Einsteckstutzen | | |
| 14 | Aufweitabschnitt | | |
| 15 | Kopplungsabschnitt | | |
| 16 | Kopplungsnut | | |
| 17 | erster Schenkel | | |
| 18 | zweiter Schenkel | | |
| 19 | Basisschenkel | | |
| 20 | erster Schenkelabschnitt | | |
| 21 | zweiter Schenkelabschnitt | | |
| 22 | Schenkel-Verbindungsabschnitt | | |
| 23 | Stützschenkel | | |
| 24 | erster Radialabstand | | |
| 25 | zweiter Radialabstand | | |
| 26 | Führungsfläche | | |
| 27 | Anschlagelement | | |
| 28 | Haltevertiefung | | |

## Patentansprüche

1. Verfahren zum Koppeln von Steckverbindern (2, 3) zu einer Steckerbaugruppe (1), welche zur Verbindung von Leitungen für flüssige und/oder gasförmige Medien ausgebildet ist, bei dem folgende Schritte durchgeführt werden
- Bereitstellen eines ersten weiblichen Steckverbinders (2), welcher erste Steckverbinder (2) einen rohrförmig ausgebildeten ersten Steckverbinderkörper (6) aufweist, der einen weiblichen Aufnahmeraum (7) mit einer ersten Längsachse (8) definiert, wobei zumindest ein erster Kopplungsschlitz (9) und ein zweiter Kopplungsschlitz (10) im ersten Steckverbinderkörper (6) einander diametral gegenüberliegend angeordnet sind,
- Bereitstellen eines zweiten männlichen Steckverbinders (3), welcher zweite Steckverbinder (3) einen rohrförmig ausgebildeten zweiten Steckverbinderkörper (11) mit
- einem hohlzylindrischen Einsteckstutzen (13),
- einem daran anschließenden kegelförmig erweiternd ausgebildeten Aufweitabschnitt (14), und mit
- einem daran anschließenden Kopplungsabschnitt (15) mit einer Kopplungsnut (16), wobei vom zweiten Steckverbinderkörper (11) eine zweite Längsachse (12) definiert wird,
- Bereitstellen zumindest eines Dichtelements (4) und Anordnen desselben im ersten weiblichen Steckverbinder (2),
- Bereitstellen eines Arretierelements (5), welches Arretierelement (5) bügelförmig ausgebildet ist und sich bei in der Kopplungsstellung befindlichen Steckverbindern (2) in einem lösbaren Formschlusseingriff mit den beiden Steckverbindern (2, 3) befindet, das Arretierelement (5) umfasst
- einen ersten Schenkel (17),
- einen zweiten Schenkel (18) und
- einen Basisschenkel (19), welcher Basisschenkel (19) die beiden Schenkel (17, 18) miteinander verbindet, jeder der beiden Schenkel (17, 18) umfasst jeweils
- einen ersten Schenkelabschnitt (20-1, 20-2),
- einen zweiten Schenkelabschnitt (21-1, 21-2) und
- einen Schenkel-Verbindungsabschnitt (22-1, 22-2), welcher Schenkel-Verbindungsabschnitt (22-1; 22-2) jeweils den ersten Schenkelabschnitt (20-1; 20-2) und den zweiten Schenkelabschnitt (21-1; 21-2) miteinander verbindet, und die ersten Schenkelabschnitte (20-1, 20-2) an jeweils voneinander abgewendeten Seiten am Basisschenkel (19) daran anschließend angeordnet sind, wobei in der unverformten Ausgangsstellung zumindest die beiden zweiten Schenkelabschnitte (21-1, 21-2) parallel zueinander verlaufend ausgerichtet sind und weiters die beiden Schenkel-Verbindungsabschnitte (22-1, 22-2) in Richtung auf den Basisschenkel (19) aufeinander zulaufend ausgerichtet sind,
- Anordnen des Arretierelements (5) in den beiden Kopplungsschlitzen (9, 10) des ersten Steckverbinderkörpers (6), und dabei der Basisschenkel (19) des Arretierelements (5) in seinem Mittel zwischen den beiden Schenkeln (17, 18) in einer ersten Stellung in einem ersten Radialabstand (24) von der ersten Längsachse (8) beabstandet angeordnet wird,
- Gegenseitiges, bevorzugt fluchtendes Ausrichten der Längsachsen (8, 12) der beiden Steckverbinder (2, 3) zueinander,
- Aufeinander zu Bewegen der beiden Steckverbinder (2, 3) und schrittweises Einsetzen des zweiten Steckverbinders (3) in den weiblichen Aufnahmeraum (7) des ersten Steckverbinders (2),
(a) Einschieben des hohlzylindrischen Einsteckstutzens (13), bei dem die beiden Schenkel-Verbindungsabschnitte (22-1, 22-2) in einem Teilabschnitt derselben jeweils unmittelbar benachbart zum hohlzylindrischen Einsteckstutzen (13) oder am hohlzylindrischen Einsteckstutzen (13) an ersten Kontaktabschnitten anliegend angeordnet werden,
(b) Fortsetzen des Einsetzvorgangs in Axialrichtung, bei dem die beiden zweiten Schenkelabschnitte (21-1, 21-2) jeweils am kegelförmig erweiternd ausgebildeten Aufweitabschnitt (14) an weiteren Kontaktabschnitten anliegend abgestützt werden, und dabei der Basisschenkel (19) des Arretierelements (5) in seinem Mittel zwischen den beiden Schenkeln (17, 18) in einer zweiten Stellung in einem zweiten Radialabstand (25) von der Längsachse (8, 12) beabstandet angeordnet wird, und der zweite Radialabstand (25) einen größeren Wert aufweist als der erste Radialabstand (24),
(c) Weiteres Fortsetzen des Einsetzvorgangs in Axialrichtung, bei dem das Arretierelement (5) bei sich in der gegenseitigen Kopplungsstellung befindlichem ersten und zweiten Steckverbinder (2, 3) mit seinem zweiten Schenkelabschnitt (21-1) des ersten Schenkels (17) in den ersten Kopplungsschlitz (9) und in die Kopplungsnut (16) eingreift und der zweite Schenkel (18) mit seinem zweiten Schenkelabschnitt (21-2) in den zweiten Kopplungsschlitz (10) und in die Kopplungsnut (16) eingreift.

2. Verfahren nach Anspruch 1, **dadurch gekennzeichnet, dass** bei Erreichen der Kopplungsstellung das Arretierelement (5) mit seinem Basisschenkel (19) in die erste Stellung zurückverstellt wird.

3. Verfahren nach Anspruch 1 oder 2, **dadurch gekennzeichnet, dass** beim Schritt (a) des axialen Einsetzvorgangs des zweiten Steckverbinders (3) in den weiblichen Aufnahmeraum (7) des ersten Steckverbinders (2) die beiden zweiten Schenkelabschnitte (21-1, 21-2) jeweils in radialer Richtung beabstandet vom hohlzylindrischen Einsteckstutzen (13) angeordnet werden.

4. Verfahren nach einem der vorhergehenden Ansprüche, **dadurch gekennzeichnet, dass** nach dem Beginn des Schritts (b) die beiden Schenkel-Verbindungsabschnitte (22-1, 22-2) vom kegelförmig erweiternd ausgebildeten Aufweitabschnitt (14) abgehoben werden.

5. Verfahren nach einem der vorhergehenden Ansprüche, **dadurch gekennzeichnet, dass** während des Schritts (b) des axialen Einsetzvorgangs der Radialabstand des Mittels des Basisschenkels (19) ausgehend vom Wert des ersten Radialabstands (24) hin zum zweiten Wert des zweiten Radialabstands (25) stetig erhöht wird.

6. Verfahren nach einem der vorhergehenden Ansprüche, **dadurch gekennzeichnet, dass** die beiden Schenkel-Verbindungsabschnitte (22-1, 22-2) des Arretierelements (5) bei sich in der Kopplungsstellung befindlichen Steckverbindern (2, 3) jeweils zu ihrem überwiegenden Längenanteil in der Kopplungsnut (16) angeordnet oder aufgenommen werden.

7. Verfahren nach einem der vorhergehenden Ansprüche, **dadurch gekennzeichnet, dass** der Basisschenkel (19) des Arretierelements (5), insbesondere dessen Mittelabschnitt, zumindest in der Kopplungsstellung am ersten Steckverbinder (2) anliegend abgestützt wird.

8. Verfahren nach einem der vorhergehenden Ansprüche, **dadurch gekennzeichnet, dass** der Wert des zweiten Radialabstands (25) des Basisschenkels (19) von der Längsachse (8, 12) nach dem Verlassen des Aufweitabschnitts (14) der beiden Schenkel (17, 18) und vor dem jeweiligen Einbringen der beiden zweiten Schenkelabschnitte (21-1, 21-2) in die Kopplungsnut (16) ein Maximum beträgt.

9. Steckerbaugruppe (1) zur Verbindung von Leitungen für flüssige und/oder gasförmige Medien umfassend
- einen ersten weiblichen Steckverbinder (2), welcher erste Steckverbinder (2) einen rohrförmig ausgebildeten ersten Steckverbinderkörper (6) aufweist, der einen weiblichen Aufnahmeraum (7) mit einer ersten Längsachse (8) definiert, wobei zumindest ein erster Kopplungsschlitz (9) und ein zweiter Kopplungsschlitz (10) im ersten Steckverbinderkörper (6) einander diametral gegenüberliegend angeordnet sind,
- einen zweiten männlichen Steckverbinder (3), welcher zweite Steckverbinder (3) einen rohrförmig ausgebildeten zweiten Steckverbinderkörper (11) mit
- einem hohlzylindrischen Einsteckstutzen (13),
- einem daran anschließenden kegelförmig erweiternd ausgebildeten Aufweitabschnitt (14), und mit
- einem daran anschließenden Kopplungsabschnitt (15) mit einer Kopplungsnut (16), wobei der zweite Steckverbinderkörper (11) eine zweite Längsachse (12) definiert,
- wobei die beiden Steckverbinder (2, 3) in Axialrichtung in eine lösbare Kopplungsstellung verbringbar sind,
- zumindest ein Dichtelement (4), welches Dichtelement (4) im ersten weiblichen Steckverbinder (2) angeordnet ist,
- ein Arretierelement (5), welches Arretierelement (5) bügelförmig ausgebildet ist und in der Kopplungsstellung in einem lösbaren Formschlusseingriff mit den beiden Steckverbindern (2, 3) steht, das Arretierelement (5) umfasst
- einen ersten Schenkel (17),
- einen zweiten Schenkel (18) und
- einen Basisschenkel (19), welcher Basisschenkel (19) die beiden Schenkel (17, 18) miteinander verbindet, jeder der beiden Schenkel (17, 18) umfasst jeweils
- einen ersten Schenkelabschnitt (20-1, 20-2),
- einen zweiten Schenkelabschnitt (21-1, 21-2) und
- einen Schenkel-Verbindungsabschnitt (22-1, 22-2), welcher Schenkel-Verbindungsabschnitt (22-1, 22-2) jeweils den ersten Schenkelabschnitt (20-1; 20-2) und den zweiten Schenkelabschnitt (21-1; 21-2) miteinander verbindet, und die ersten Schenkelabschnitte (20-1, 20-2) an jeweils voneinander abgewendeten Seiten am Basisschenkel (19) daran anschließend angeordnet sind, wobei in der unverformten Ausgangsstellung zumindest die beiden zweiten Schenkelabschnitte (21-1, 21-2) parallel zueinander verlaufend ausgerichtet sind und weiters die beiden Schenkel-Verbindungsabschnitte (22-1, 22-2) in Richtung auf den Basisschenkel (19) aufeinander zulaufend ausgerichtet sind,
- wobei das Arretierelement (5) bei sich in der Kopplungsstellung befindlichem ersten und zweiten Steckverbinder (2, 3) mit seinem ersten Schenkel (17) in den ersten Kopplungsschlitz (9) und in die Kopplungsnut (16) eingreift und der zweite Schenkel (18) in den zweiten Kopplungsschlitz (10) und in die Kopplungsnut (16) eingreift, und
- wobei der Basisschenkel (19) des Arretierelements (5) zumindest in der Kopplungsstellung in seinem Mittel zwischen den beiden Schenkeln (17, 18) in einer ersten Stellung in einem ersten Radialabstand (24) von der Längsachse (8, 12) beabstandet angeordnet ist, insbesondere zur Durchführung des Verfahrens nach einem der vorhergehenden Ansprüche,
**dadurch gekennzeichnet,**
- **dass** beim Beginn des axialen Einsetzens des zweiten Steckverbinders (3) in den weiblichen Aufnahmeraum (7) des ersten Steckverbinders (2) jeweils die beiden Schenkel-Verbindungsabschnitte (22) in einem Teilabschnitt derselben unmittelbar benachbart zum hohlzylindrischen Einsteckstutzen (13) oder am hohlzylindrischen Einsteckstutzen (13) an ersten Kontaktabschnitten anliegend angeordnet sind,
- **dass** beim weiteren Einsetzen in Axialrichtung jeweils die beiden zweiten Schenkelabschnitte (21-1, 21-2) am kegelförmig erweiternd ausgebildeten Aufweitabschnitt (14) an weiteren Kontaktabschnitten anliegend abgestützt sind,
- **dass** zumindest in der am kegelförmig erweiternd ausgebildeten Aufweitabschnitt (14) anliegenden Stellung der zweiten Schenkelabschnitte (21-1, 21-2) der Basisschenkel (19) des Arretierelements (5) in seinem Mittel zwischen den beiden Schenkeln (17) in einer zweiten Stellung in einem zweiten Radialabstand (25) von der Längsachse (8, 12) beabstandet angeordnet ist, und
- **dass** der zweite Radialabstand (25) einen größeren Wert aufweist ist als der erste Radialabstand (24).

10. Steckerbaugruppe (1) nach Anspruch 9, **dadurch gekennzeichnet, dass** bei sich in der Kopplungsstellung befindlichem Arretierelement (5) der Basisschenkel (19) in seine erste Stellung zurückverstellt ist. (2)

11. Steckerbaugruppe (1) nach Anspruch 9 oder 10, **dadurch gekennzeichnet, dass** beim Beginn des axialen Einsetzens des zweiten Steckverbinders (3) in den weiblichen Aufnahmeraum (7) des ersten Steckverbinders (2) die beiden zweiten Schenkelabschnitte (21-1, 21-2) jeweils in radialer Richtung beabstandet vom hohlzylindrischen Einsteckstutzen (13) angeordnet sind. (3)

12. Steckerbaugruppe (1) nach einem der Ansprüche 9 bis 11, **dadurch gekennzeichnet, dass** bei der Abstützung der beiden zweiten Schenkelabschnitte (21-1, 21-2) am kegelförmig erweiternd ausgebildeten Aufweitabschnitt (14) die beiden Schenkel-Verbindungsabschnitte (22-1, 22-2) beabstandet vom kegelförmig erweiternd ausgebildeten Aufweitabschnitt (14) angeordnet sind. (4)

13. Steckerbaugruppe (1) nach einem der Ansprüche 9 bis 12, **dadurch gekennzeichnet, dass** die beiden Schenkel-Verbindungsabschnitte (22-1, 22-2) des Arretierelements (5) bei sich in der Kopplungsstellung befindlichen Steckverbindern (2, 3) jeweils zu ihrem überwiegenden Längenanteil in der Kopplungsnut (16) angeordnet oder aufgenommen sind. (6)

14. Steckerbaugruppe (1) nach einem der Ansprüche 9 bis 13, **dadurch gekennzeichnet, dass** der Basisschenkel (19) des Arretierelements (5), insbesondere dessen Mittelabschnitt, zumindest in der Kopplungsstellung am ersten Steckverbinder (2) anliegend abgestützt ist. (7)

15. Steckerbaugruppe (1) nach einem der Ansprüche 9 bis 14, **dadurch gekennzeichnet, dass** der Wert des zweiten Radialabstands (25) des Basisschenkels (19) vor dem jeweiligen Einbringen der beiden zweiten Schenkelabschnitte (21-1, 21-2) in die Kopplungsnut (16) ein Maximum aufweist. (8)

16. Steckerbaugruppe (1) nach einem der Ansprüche 9 bis 15, **dadurch gekennzeichnet, dass** der Basisschenkel (19) ausgehend von seinem Mittel zwischen den beiden Schenkeln (17, 18) einen dachförmig abgewinkelten Längsverlauf in Richtung auf die beiden Schenkel (17, 18) aufweist.

17. Steckerbaugruppe (1) nach einem der Ansprüche 9 bis 16, **dadurch gekennzeichnet, dass** die beiden ersten Schenkelabschnitte (20-1, 20-2) in der unverformten Ausgangsstellung des Arretierelements (5) parallel zueinander verlaufend ausgerichtet sind.

18. Steckerbaugruppe (1) nach einem der Ansprüche 9 bis 17, **dadurch gekennzeichnet, dass** der Basisschenkel (19), jeder der ersten Schenkelabschnitte (20-1, 20-2), jeder der Schenkel-Verbindungsabschnitte (22-1, 22-2) und jeder der zweiten Schenkelabschnitte (21-1, 21-2) in einer gemeinsamen Ebene (E) verlaufend angeordnet sind.

19. Steckerbaugruppe (1) nach Anspruch 18, **dadurch gekennzeichnet, dass** jeweils ein Stützschenkel (23-1, 23-2) an jedem der zweiten Schenkelabschnitte (20-1, 20-2) an deren vom Basisschenkel (19) abgewendeten Ende angeordnet ist und die Stützschenkel (23-1, 23-2) jeweils eine Längsorientierung aufweisen, welche in einer Normalrichtung bezüglich der gemeinsamen Ebene (E) ausgerichtet ist.

20. Steckerbaugruppe (1) nach Anspruch 19, **dadurch gekennzeichnet, dass** die beiden Stützschenkel (23-1, 23-2) jeweils zwischen der ersten Stellung des Basisschenkels (19) und der zweiten Stellung des Basisschenkels (19) und vice versa am ersten Steckverbinderkörper (6) anliegend abgestützt sind.

## Claims

1. A method for coupling plug connectors (2, 3) to form a plug assembly (1), which is formed for connecting pipes for liquid and/or gaseous media, in which method the following steps are carried out
- providing a first female plug connector (2), said first plug connector (2) comprising a tube-shaped first plug connector body (6), which defines a female receiving space (7) with a first longitudinal axis (8), wherein at least a first coupling slot (9) and a second coupling slot (10) are arranged in the first plug connector body (6) so as to diametrically oppose one another,
- providing a second male plug connector (3), said second plug connector (3) having a tube-shaped second plug connector body (11) with
- a hollow-cylindrical insertion piece (13),
- an adjoining conically extending widening section (14), and with
- an adjoining coupling section (15) with a coupling groove (16), wherein the second plug connector body (11) defines a second longitudinal axis (12),
- providing at least one sealing element (4) and arranging it in the first female plug connector (2),
- providing a locking element (5), said locking element (5) being strap-shaped and being in a releasable positive engagement with the two plug connectors (2, 3) when the plug connectors (2) are in the coupling position, the locking element (5) comprising
- a first leg (17),
- a second leg (18) and
- abase leg (19), said base leg (19) connecting the two legs (17, 18) to one another, each of the two legs (17, 18) in each case comprising
- a first leg section (20-1, 20-2),
- a second leg section (21-1, 21-2) and
- a leg connection section (22-1, 22-2), which leg connection section (22-1; 22-2) connects the first leg section (20-1; 20-2) and the second leg section (21-1; 21-2) to one another in each case, and the first leg sections (20-1, 20-2) are arranged adjoining the base leg (19) on sides facing away from one another in each case, wherein at least the two second leg sections (21-1, 21-2) are aligned such that they run parallel to one another in the undeformed initial position, and furthermore the two leg connection sections (22-1, 22-2) are aligned such that they run towards one another in the direction of the base leg (19),
- arranging the locking element (5) in the two coupling slots (9, 10) of the first plug connector body (6), and, in this process, arranging the base leg (19) of the locking element (5) in its center between the two legs (17, 18) in a first position spaced at a first radial distance (24) from the first longitudinal axis (8),
- mutual, preferably aligned, orientation of the longitudinal axes (8, 12) of the two plug connectors (2, 3) with respect to each other,
- moving the two plug connectors (2, 3) towards each other and step by step inserting the second plug connector (3) into the female receiving space (7) of the first plug connector (2),
(a) inserting the hollow-cylindrical insertion piece (13), in which the two leg connection sections (22-1, 22-2) are each arranged in a partial section thereof directly adjacent to the hollow-cylindrical insertion piece (13) or resting on the hollow-cylindrical insertion piece (13) against first contact sections,
(b) continuing the insertion process in the axial direction, in which the two second leg sections (21-1, 21-2) are each supported on the conically extending widening section (14) adjoining further contact sections, and, in this process, the base leg (19) of the locking element (5) is arranged in its center between the two legs (17, 18) in a second position at a second radial distance (25) from the longitudinal axis (8, 12), and the second radial distance (25) has a greater value than the first radial distance (24),
(c) further continuing the insertion process in the axial direction, in which, when the first and second plug connectors (2, 3) are in the mutual coupling position, the locking element (5) engages with its second leg section (21-1) of the first leg (17) in the first coupling slot (9) and in the coupling groove (16), and the second leg (18) engages with its second leg section (21-2) in the second coupling slot (10) and in the coupling groove (16).

2. The method according to claim 1, **characterized in that**, when the coupling position is reached, the locking element (5) with its base leg (19) is moved back to the first position.

3. The method according to claim 1 or 2, **characterized in that** during step (a) of the axial insertion process of the second plug connector (3) into the female receiving space (7) of the first plug connector (2), the two second leg sections (21-1, 21-2) are each arranged at a distance from the hollow cylindrical insertion piece (13) in the radial direction.

4. The method according to one of the preceding claims, **characterized in that** after the beginning of step (b), the two leg connection sections (22-1, 22-2) are lifted off the conically extending widening section (14).

5. The method according to one of the preceding claims, **characterized in that** during step (b) of the axial insertion process, the radial distance of the center of the base leg (19) is continuously increased starting from the value of the first radial distance (24) to the second value of the second radial distance (25).

6. The method according to one of the preceding claims, **characterized in that** the two leg connection sections (22-1, 22-2) of the locking element (5) are arranged or accommodated in the coupling groove (16) over the majority of their length when the plug connectors (2, 3) are in the coupling position.

7. The method according to one of the preceding claims, **characterized in that** the base leg (19) of the locking element (5), in particular its central section, is supported resting against the first plug connector (2) at least in the coupling position.

8. The method according to one of the preceding claims, **characterized in that** the value of the second radial distance (25) of the base leg (19) from the longitudinal axis (8, 12) amounts to a maximum after leaving the widening section (14) of the two legs (17, 18) and prior to the respective insertion of the two second leg sections (21-1, 21-2) into the coupling groove (16).

9. A plug assembly (1) for connecting pipes for liquid and/or gaseous media, comprising
- a first female plug connector (2), said first plug connector (2) comprising a tube-shaped first plug connector body (6), which defines a female receiving space (7) with a first longitudinal axis (8), wherein at least a first coupling slot (9) and a second coupling slot (10) are arranged in the first plug connector body (6) so as to diametrically oppose one another,
- a second male plug connector (3), said second plug connector (3) having a tube-shaped second plug connector body (11) with
- a hollow-cylindrical insertion piece (13),
- an adjoining conically extending widening section (14), and with
- an adjoining coupling section (15) with at least one coupling groove (16), wherein the second plug connector body (11) defines a second longitudinal axis (12),
- wherein the two plug connectors (2, 3) can be brought into a releasable coupling position in the axial direction,
- at least one sealing element (4), said sealing element (4) being arranged in the first female plug connector (2),
- a locking element (5), said locking element (5) being strap-shaped and being in a releasable positive engagement with the two plug connectors (2, 3) in the coupling position, the locking element (5) comprising
- a first leg (17),
- a second leg (18) and
- a base leg (19), said base leg (19) connecting the two legs (17, 18) to one another, each of the two legs (17, 18) in each case comprising
- a first leg section (20-1, 20-2),
- a second leg section (21-1, 21-2) and
- a leg connection section (22-1, 22-2), which leg connection section (22-1, 22-2) connects the first leg section (20-1; 20-2) and the second leg section (21-1; 21-2) to one another in each case, and the first leg sections (20-1, 20-2) are arranged adjoining the base leg (19) on sides facing away from one another in each case, wherein at least the two second leg sections (21-1, 21-2) are aligned such that they run parallel to one another in the undeformed initial position, and furthermore the two leg connection sections (22-1, 22-2) are aligned such that they run towards one another in the direction of the base leg (19),
- wherein, when the first and second plug connectors (2, 3) are in the coupling position, the locking element (5) engages with its first leg (17) in the first coupling slot (9) and in the coupling groove (16) and the second leg (18) engages in the second coupling slot (10) and in the coupling groove (16), and
- wherein the base leg (19) of the locking element (5), at least in the coupling position, is arranged in its center between the two legs (17, 18) in a first position spaced apart from the longitudinal axis (8, 12) at a first radial distance (24), in particular for carrying out the method according to one of the preceding claims,
**characterized in**
- **that**, at the beginning of axial insertion of the second plug connector (3) into the female receiving space (7) of the first plug connector (2), in each case the two leg connection sections (22) are arranged in a partial section thereof directly adjacent to the hollow-cylindrical insertion piece (13) or resting on the hollow-cylindrical insertion piece (13) against first contact sections,
- **that**, during further insertion in the axial direction, the two second leg sections (21-1, 21-2) are in each case supported resting against further contact sections on the conically extending widening section (14),
- **that**, at least in the position of the second leg sections (21-1, 21-2) resting against the conically extending widening section (14), the base leg (19) of the locking element (5) is arranged in its center between the two legs (17) in a second position at a second radial distance (25) from the longitudinal axis (8, 12), and
- **that** the second radial distance (25) has a greater value than the first radial distance (24).

10. The plug assembly (1) according to claim 9, **characterized in that** the base leg (19) is set back into its first position when the locking element (5) is in the coupling position.

11. The plug assembly (1) according to claim 9 or 10, **characterized in that** during the beginning of the axial insertion process of the second plug connector (3) into the female receiving space (7) of the first plug connector (2), the two second leg sections (21-1, 21-2) are each arranged at a distance from the hollow cylindrical insertion piece (13) in the radial direction.

12. The plug assembly (1) according to one of claims 9 to 11, **characterized in that** when the two second leg sections (21-1, 21-2) are supported on the conically extending widening section (14), the two leg connection sections (22-1, 22-2) are arranged at a distance from the conically extending widening section (14).

13. The plug assembly (1) according to one of claims 9 to 12, **characterized in that** the two leg connection sections (22-1, 22-2) of the locking element (5) are arranged or accommodated in the coupling groove (16) over the majority of their length when the plug connectors (2, 3) are in the coupling position.

14. The plug assembly (1) according to one of claims 9 to 13, **characterized in that** the base leg (19) of the locking element (5), in particular its central section, is supported resting against the first plug connector (2) at least in the coupling position.

15. The plug assembly (1) according to one of claims 9 to 14, **characterized in that** the value of the second radial distance (25) of the base leg (19) amounts to a maximum prior to the respective insertion of the two second leg sections (21-1, 21-2) into the coupling groove (16).

16. The plug assembly (1) according to one of claims 9 to 15, **characterized in that** the base leg (19) starting out from its center between the two legs (17, 18) has a roof-shaped angled longitudinal extension in the direction of the two legs (17, 18).

17. The plug assembly (1) according to one of claims 9 to 16, **characterized in that** the two first leg sections (20-1, 20-2) are aligned such that they run parallel to one another in the undeformed initial position of the locking element (5).

18. The plug assembly (1) according to one of claims 9 to 17, **characterized in that** the base leg (19), each of the first leg sections (20-1, 20-2), each of the leg connection sections (22-1, 22-2) and also each of the second leg sections (21-1, 21-2) are arranged extending in a common plane (E).

19. The plug assembly (1) according to claim 18, **characterized in that** one support leg (23-1, 23-2) is arranged on each of the second leg sections (20-1, 20-2) at their end facing away from the base leg (19), and the support legs (23-1, 23-2) each have a longitudinal orientation which is aligned in a normal direction with respect to the common plane (E).

20. The plug assembly (1) according to claim 19, **characterized in that** the two support legs (23-1, 23-2) are each supported resting against the first plug connector body (6) between the first position of the base leg (19) and the second position of the base leg (19) and vice versa.

## Revendications

1. Procédé de couplage de connecteurs enfichables (2, 3) en un sous-ensemble de connexion (1), qui est conçu pour le raccordement de conduites pour des milieux liquides et/ou gazeux, dans lequel les étapes suivantes sont exécutées :
- mise à disposition d'un premier connecteur enfichable femelle (2), ce premier connecteur enfichable (2) comprenant un premier corps de connecteur enfichable (6) de forme tubulaire, qui définit un espace de logement femelle (7) avec un premier axe longitudinal (8), dans lequel au moins une première fente de couplage (9) et une deuxième fente de couplage (10) dans le premier corps de connecteur enfichable (6) sont disposés de manière diamétralement opposée,
- mise à disposition d'un deuxième connecteur enfichable mâle (3), ce deuxième connecteur enfichable (3) comprenant un deuxième corps de connecteur enfichable (11) de forme tubulaire avec
- un embout d'enfichage cylindrique creux (13),
- à la suite de celui-ci, une portion évasée (14) s'élargissant de manière conique, et avec
- à la suite de celle-ci, une portion de couplage (15) avec une rainure de couplage (16), dans lequel un deuxième axe longitudinal (12) est défini par le deuxième corps de connecteur enfichable (11),
- mise à disposition d'au moins un élément d'étanchéité (4) et disposition de celui-ci dans le premier connecteur enfichable femelle (2),
- mise à disposition d'un élément d'arrêt (5), cet élément d'arrêt (5) présentant la forme d'un étrier et se trouvant, lorsque les connecteurs enfichables (2) se trouvent dans la position de couplage, dans un emboîtement par complémentarité de forme amovible avec les deux connecteurs enfichables (2, 3), l'élément d'arrêt (5) comprenant
- une première branche (17),
- une deuxième branche (18) et
- une branche de base (19), cette branche de base (19) reliant entre elles les deux branches (17, 18), chacune des deux branches (17, 18) comprenant respectivement
- une première portion de branche (20-1, 20-2),
- une deuxième portion de branche (21-1, 21-2) et
- une portion de liaison de branches (22-1, 22-2), cette portion de liaison de branches (22-1 ; 22-2) reliant entre elles respectivement la première portion de branche (20-1 ; 20-2) et la deuxième portion de branche (21-1 ; 21-2), et les premières portions de branches (20-1, 20-2) étant disposées à la suite de celle-ci, sur des côtés opposés entre eux sur la branche de base (19), dans lequel, dans la position initiale non déformée, au moins les deux deuxièmes portions de branches (21-1, 21-2) sont orientées parallèlement entre elles et, en outre, les deux portions de liaison de branches (22-1, 22-2) sont orientées de façon à converger l'une vers l'autre en direction de la branche de base (19),
- disposition de l'élément d'arrêt (5) dans les deux fentes de couplage (9, 10) du premier corps de connecteur enfichable (6), et la branche de base (19) de l'élément d'arrêt (5) est donc disposée, dans son milieu, entre les deux branches (17, 18), dans une première position, à une première distance radiale (24) du premier axe longitudinal (8),
- orientation mutuelle, de préférence alignement des axes longitudinaux (8, 12) des deux connecteurs enfichables (2, 3) entre eux,
- déplacement l'un vers l'autre des deux connecteurs enfichables (2, 3) et insertion progressive du deuxième connecteur enfichable (3) dans l'espace de logement femelle (7) du premier connecteur enfichable (2),
(a) insertion de l'embout cylindrique creux (13), dans laquelle les deux portions de liaison de branches (22-1, 22-2) sont disposées de façon à s'appuyer, dans une partie de celles-ci, respectivement de manière directement adjacente à l'embout d'enfichage cylindrique creux (13) ou sur l'embout d'enfichage cylindrique creux (13), contre des premières portions de contact,
(b) continuation du processus d'insertion dans la direction axiale, dans lequel les deux deuxièmes portions de branches (21-1, 21-2) s'appuient respectivement, sur la portion évasée (14) s'élargissant de manière conique, contre des portions de contact supplémentaires et donc la branche de base (19) de l'élément d'arrêt (5) est disposée, dans son milieu, entre les deux branches (17, 18), dans une deuxième position, à une deuxième distance radiale (25) de l'axe longitudinal (8, 12) et la deuxième distance radiale (25) présentant une valeur plus grande que la première distance radiale (24),
(c) continuation supplémentaire du processus d'insertion dans la direction axiale, dans lequel l'élément d'arrêt (5) s'emboîte, lorsque les premier et deuxième connecteurs enfichables (2, 3) se trouvent dans la position de couplage mutuel, avec sa deuxième portion de branche (21-1) de la première branche (17), dans la première fente de couplage (9) et dans la rainure de couplage (16) et la deuxième branche (18) s'emboîte, avec sa deuxième portion de branche (21-2), dans la deuxième fente de couplage (10) et dans la rainure de couplage (16).

2. Procédé selon la revendication 1, **caractérisé en ce que**, lorsque la position de couplage est atteinte, l'élément d'arrêt (5) est déplacé, avec sa branche de base (19), à nouveau vers la première position.

3. Procédé selon la revendication 1 ou 2, **caractérisé en ce que**, lors de l'étape (a) du processus d'insertion axiale du deuxième connecteur enfichable (3) dans l'espace de logement femelle (7) du premier connecteur enfichable (2), les deux deuxièmes portions de branches (21-1, 21-2) sont disposées respectivement à une distance radiale de l'embout d'enfichage cylindrique creux (13).

4. Procédé selon l'une des revendications précédentes, **caractérisé en ce que**, après le début de l'étape (b), les deux portions de liaisons de branches (22-1, 22-2) sont soulevées par la portion évasée s'élargissant de manière conique (14).

5. Procédé selon l'une des revendications précédentes, **caractérisé en ce que**, pendant l'étape (b) du processus d'insertion axiale, la distance radiale du milieu de la branche de base (19) est augmentée de manière constante à partir de la valeur de la première distance radiale (24) vers la deuxième valeur de la deuxième distance radiale (25).

6. Procédé selon l'une des revendications précédentes, **caractérisé en ce que** les deux portions de liaison de branches (22-1, 22-2) de l'élément d'arrêt (5) sont disposées ou logées, lorsque les connecteurs enfichables (2, 3) se trouvent dans la position de couplage, respectivement, sur la plus grande partie de leur longueur, dans la rainure de couplage (16).

7. Procédé selon l'une des revendications précédentes, **caractérisé en ce que** la branche de base (19) de l'élément d'arrêt (5), plus particulièrement sa portion centrale, s'appuie, au moins dans la position de couplage, contre le premier connecteur enfichable (2).

8. Procédé selon l'une des revendications précédentes, **caractérisé en ce que** la valeur de la deuxième distance radiale (25) de la branche de base (19) par rapport à l'axe longitudinal (8, 12) représente un maximum après le retrait de la portion évasée (14) des deux branches (17, 18) et avant l'introduction respective des deux deuxièmes portions de branches (21-1, 21-2) dans la rainure de couplage (16).

9. Sous-ensemble de connexion (1) pour le raccordement de conduites pour les milieux liquides et/ou gazeux, comprenant
- un premier connecteur enfichable femelle (2), ce premier connecteur enfichable (2) comprenant un premier corps de connecteur enfichable (6) de forme tubulaire, qui définit un espace de logement femelle (7) avec un premier axe longitudinal (8), dans lequel au moins une première fente de couplage (9) et une deuxième fente de couplage (10) dans le premier corps de connecteur enfichable (6) sont disposés de manière diamétralement opposée,
- un deuxième connecteur enfichable mâle (3), ce deuxième connecteur enfichable (3) comprenant un deuxième corps de connecteur enfichable (11) de forme tubulaire avec
- un embout d'enfichage cylindrique creux (13),
- à la suite de celui-ci, une portion évasée (14) s'élargissant de manière conique, et avec
- à la suite de celle-ci, une portion de couplage (15) avec une rainure de couplage (16), dans lequel un deuxième axe longitudinal (12) est défini par le deuxième corps de connecteur enfichable (11),
- dans lequel les deux connecteurs enfichables (2, 3) peuvent être mis, dans la direction axiale, dans une position de couplage amovible,
- au moins un élément d'étanchéité (4), cet élément d'étanchéité (4) étant disposé dans le premier connecteur enfichable femelle (2),
- un élément d'arrêt (5), cet élément d'arrêt (5) présentant la forme d'un étrier et se trouvant, dans la position de couplage, dans un emboîtement par complémentarité de forme amovible avec les deux connecteurs enfichables (2, 3), l'élément d'arrêt (5) comprenant
- une première branche (17),
- une deuxième branche (18) et
- une branche de base (19), cette branche de base (19) reliant entre elles les deux branches (17, 18), chacune des deux branches (17, 18) comprenant respectivement
- une première portion de branche (20-1, 20-2),
- une deuxième portion de branche (21-1, 21-2) et
- une portion de liaison de branches (22-1, 22-2), cette portion de liaison de branches (22-1, 22-2) reliant entre elles respectivement la première portion de branche (20-1 ; 20-2) et la deuxième portion de branche (21-1 ; 21-2), et les premières portions de branches (20-1, 20-2) étant disposées à la suite de celle-ci, sur des côtés opposés entre eux sur la branche de base (19), dans lequel, dans la position initiale non déformée, au moins les deux deuxièmes portions de branches (21-1, 21-2) sont orientées parallèlement entre elles et, en outre, les deux portions de liaison de branches (22-1, 22-2) sont orientées de façon à converger l'une vers l'autre en direction de la branche de base (19),
- dans lequel l'élément d'arrêt (5) s'emboîte, lorsque les premier et deuxième connecteurs enfichables (2, 3) se trouvent dans la position de couplage, avec sa première branche (17), dans la première fente de couplage (9) et dans la rainure de couplage (16) et la deuxième branche (18) s'emboîte dans la deuxième fente de couplage (10) et dans la rainure de couplage (16) et
- dans lequel la branche de base (19) de l'élément d'arrêt (5) est disposée, au moins dans la position de couplage, dans son milieu, entre les deux branches (17, 18), dans une première position, à une première distance radiale (24) de l'axe longitudinal (8, 12), plus particulièrement pour l'exécution du procédé selon l'une des revendications précédentes,
**caractérisé en ce que**
- lors du début de l'insertion axiale du deuxième connecteur enfichable (3) dans l'espace de logement femelle (7) du premier connecteur enfichable (2), respectivement les deux portions de liaison de branches (22) sont disposées de façon à s'appuyer, dans une partie de celles-ci, respectivement de manière directement adjacente à l'embout d'enfichage cylindrique creux (13) ou sur l'embout d'enfichage cylindrique creux (13), contre des premières portions de contact,
- lors de la suite de l'insertion dans la direction axiale, les deux deuxièmes portions de branches (21-1, 21-2) s'appuient respectivement, sur la portion évasée (14) s'élargissant de manière conique, contre des portions de contact supplémentaires
- au moins dans la position, appuyée contre la portion évasée s'élargissant de manière conique (14), des deuxièmes portions de branches (21-1, 21-2), la branche de base (19) de l'élément d'arrêt (5) est disposée, dans son milieu, entre les deux branches (17), dans une deuxième position, à une deuxième distance radiale (25) de l'axe longitudinal (8, 12) et
- la deuxième distance radiale (25) présente une valeur plus grande que la première distance radiale (24).

10. Sous-ensemble de connexion (1) selon la revendication 9, **caractérisé en ce que**, lorsque l'élément d'arrêt (5) se trouve dans la position de couplage, la branche de base (19) est déplacée à nouveau vers sa première position.

11. Sous-ensemble de connexion (1) selon la revendication 9 ou 10, **caractérisé en ce que**, au début de l'insertion axiale du deuxième connecteur enfichable (3) dans l'espace de logement femelle (7) du premier connecteur enfichable (2), les deux deuxièmes portions de branches (21-1, 21-2) sont disposées respectivement à une distance radiale de l'embout d'enfichage cylindrique creux (13).

12. Sous-ensemble de connexion (1) selon l'une des revendications 9 à 11, **caractérisé en ce que**, lorsque les deux deuxièmes portions de branches (21-1, 21-2) s'appuient contre la portion évasée s'élargissant de manière conique (14), les deux portions de liaison de branches (22-1, 22-2) sont disposées à une certaine distance de la portion évasée s'élargissant de manière conique (14).

13. Sous-ensemble de connexion (1) selon l'une des revendications 9 à 12, **caractérisé en ce que** les deux portions de liaison de branches (22-1, 22-2) de l'élément d'arrêt (5) sont disposées ou logées, lorsque les connecteurs enfichables (2, 3) se trouvent dans la position de couplage, respectivement sur la plus grande partie de la leur longueur, dans la rainure de couplage (16).

14. Sous-ensemble de connexion (1) selon l'une des revendications 9 à 13, **caractérisé en ce que** la banche de base (19) de l'élément d'arrêt (5), plus particulièrement sa portion centrale, s'appuie, au moins dans la position de couplage, contre le premier connecteur enfichable (2).

15. Sous-ensemble de connexion (1) selon l'une des revendications 9 à 14, **caractérisé en ce que** la valeur de la deuxième distance radiale (25) de la branche de base (19) présente un maximum avant l'introduction respective des deux deuxièmes portions de branches (21-1, 21-2) dans la rainure de couplage (16).

16. Sous-ensemble de connexion (1) selon l'une des revendications 9 à 15, **caractérisé en ce que** la branche de base (19) présente, à partir de son centre, entre les deux branches (17, 18), une extension inclinée en forme de toit en direction des deux branches (17, 18).

17. Sous-ensemble de connexion (1) selon l'une des revendications 9 à 16, **caractérisé en ce que** les deux premières portions de branches (20-1, 20-2) sont orientées parallèlement entre elles dans la position initiale non déformée de l'élément d'arrêt (5).

18. Sous-ensemble de connexion (1) selon l'une des revendications 9 à 17, **caractérisé en ce que** la branche de base (19), chacune des premières portions de branches (20-1, 20-2), chacune des portions de liaison de branches (22-1, 22-2) et chacune des deuxièmes portions de branches (21-1, 21-2) s'étendant dans un plan (E) commun.

19. Sous-ensemble de connexion (1) selon la revendication 18, **caractérisé en ce qu'**une branche d'appui (23-1, 23-2), est disposé respectivement, sur chacune des deuxièmes portions de branches (20-1, 20-2), à une extrémité de celle-ci, opposée à la branche de base (19) et les branches d'appui (23-1, 23-2) présentent chacune une orientation longitudinale qui est orientée dans une direction perpendiculaire par rapport au plan (E) commun.

20. Sous-ensemble de connexion (1) selon la revendication 19, **caractérisé en ce que** les deux branches d'appui (23-1, 23-2) s'appuient, respectivement entre la première position de la branche de base (19) et la deuxième position de la branche de base (19), et vice-versa, contre le premier corps de connecteur enfichable (6).
